# EUROPEAN PATENT APPLICATION

(11) **EP 3 917 204 A1**
(43) Date of publication of application: **01.12.2021**
(21) Application number: 20754958.5
(22) Date of filing: 10.02.2020
(51) Int. Cl.: H04W 24/10

(54) **INFORMATION REPORTING METHOD, APPARATUS AND DEVICE**

(30) Priority: 15.02.2019 CN 201910117882
(71) Applicant: Huawei Technologies Co., Ltd., Shenzhen, Guangdong 518129 (CN)
(72) Inventor: HU, Xingxing, Shenzhen, Guangdong 518129 (CN); ZHANG, Hongping, Shenzhen, Guangdong 518129 (CN); ZENG, Qinghai, Shenzhen, Guangdong 518129 (CN)
(74) Representative: Gill Jennings & Every LLP
(86) International application number: PCT/CN2020/074614
(87) International publication number: WO 2020/164453

(57) **Abstract**

This application provides an information reporting method and apparatus, and a device. The method includes: A terminal device in a first state in a state set logs reported information if meeting a logging condition, where the reported information is used to indicate a network coverage situation, the state set includes one or more of the following states: any cell selection state, camped on any cell state, or camped normally state in which signal quality of a serving cell is less than or equal to a quality threshold, and the logging condition includes one or more of the following: a distance condition or a cell state change condition. The terminal device sends the reported information to a network side device. This application improves flexibility of learning of a cell coverage situation by a network side device.

## Description

This application claims priority to Chinese Patent Application No. 201910117882.2, filed with the Chinese Patent Office on February 15, 2019 and entitled "INFORMATION REPORTING METHOD AND APPARATUS, AND DEVICE", which is incorporated herein by reference in its entirety.

### TECHNICAL FIELD

This application relates to the field of communication technologies, and in particular, to an information reporting method and apparatus, and a device.

### BACKGROUND

Generally, a network side device may collect information from a terminal device, to learn of a network coverage situation.

In a current technology, the network side device may send a logging interval of minimization of drive tests (Minimization of Drive-Tests, MDT) measurement to the terminal device, and the terminal device may log information at the logging interval that is of the MDT measurement and that is configured by the network side device, and report the logged information to the network side device.

However, in the current technology, there is a problem that it is not much flexible for the network side device to learn of a cell coverage situation.

### SUMMARY

This application provides an information reporting method and apparatus, and a device, to resolve a problem in a current technology that it is not much flexible for a network side device to learn of a cell coverage situation.

According to a first aspect, an embodiment of this application provides an information reporting method. The method includes the following steps:

A terminal device in a first state in a state set logs reported information if meeting a logging condition, where the reported information is used to indicate a network coverage situation, the state set includes one or more of the following states: any cell selection state, camped on any cell state, or camped normally state in which signal quality of a serving cell is less than or equal to a quality threshold, and the logging condition includes one or more of the following: a distance condition or a cell state change condition.

The terminal device sends the reported information to a network side device.

In the foregoing solution, the terminal device in the first state in the state set logs the reported information if meeting the logging condition, and the terminal device sends the reported information to the network side device. It may be considered that there is a coverage hole when the terminal device is in the first state, so that the terminal device in the first state logs and reports the coverage hole when meeting the logging condition. Compared with Manner 1 and Manner 2 described in specific implementations, this solution improves flexibility of learning of a cell coverage situation by the network side device. In addition, the use of the logging condition can avoid a problem that relatively large storage space of the terminal device is occupied by a relatively large amount of reported information logged by the terminal device because the terminal device remains in the first state for a long period of time. In addition, a resource occupied when the terminal device sends the reported information to the network side device may be saved.

In a possible implementation, the reported information includes number-of-times information, and the number-of-times information is used to indicate a quantity of times that the terminal device changes from a second state to the first state; and the second state is a state that is in the any cell selection state, the camped on any cell state, or the camped normally state and that is different from the first state.

In the foregoing solution, the reported information includes the number-of-times information, so that the network side can directly obtain, from the reported information, the quantity of times that the terminal device changes from the second state to the first state.

In a possible implementation, locations at which the terminal device logs the reported information at two neighboring times correspond to a first location and a second location, and the distance condition includes a condition that a distance between the first location and the second location needs to meet.

In the foregoing solution, the distance condition includes the condition that the distance between the first location and the second location needs to meet, so that the distance between the locations (that is, the first location and the second location) at which the terminal device logs the reported information at the two neighboring times is limited.

In a possible implementation, the logging condition further includes a time condition.

In a possible implementation, moments at which the terminal device logs the reported information at two neighboring times correspond to a first moment and a second moment, and the time condition includes a condition that a time difference between the first moment and the second moment needs to meet.

In the foregoing solution, the distance condition includes the condition that the time difference between the first moment and the second moment needs to meet, so that the time difference between the two moments (that is, the first moment and the second moment) at which the terminal device logs the reported information at the two neighboring times is limited.

In a possible implementation, the cell state change condition includes that the terminal device changes from a second state to the first state; and the second state is a state that is in the any cell selection state, the camped on any cell state, or the camped normally state and that is different from the first state.

In the foregoing solution, the cell state change condition includes that the terminal device changes from the second state to the first state, so that a change of the state of the terminal device imposes a limitation on logging the reported information by the terminal device.

In a possible implementation, the first state is the any cell selection state or the camped on any cell state, and the second state is the camped normally state.

In a possible implementation, the method further includes:
the terminal device sends indication information to the network side device in a first RRC message, where the indication information is used to indicate that the reported information has been logged; and
the terminal device receives a second RRC message from the network side device, where the second RRC message is used to request the terminal device to send the reported information.

In a possible implementation, when not receiving configuration information that is sent by the network side device by using a dedicated message, the terminal device logs the reported information, where the configuration information is used to configure the logging condition.

In the foregoing solution, the terminal device may log the reported information before receiving the configuration information that is sent by the network side device by using the dedicated message. In this case, the terminal device may log the reported information without depending on sending a logging interval by the network side.

According to a second aspect, an embodiment of this application provides an information reporting method. The method includes the following steps:

A terminal device logs reported information and sends the reported information to a network side device if the terminal device is in a first state in a state set, where the reported information is used to indicate a network coverage situation, and the state set includes one or more of the following states: any cell selection state, camped on any cell state, or camped normally state in which signal quality of a serving cell is less than or equal to a quality threshold.

Otherwise, the terminal device stops logging the reported information.

In the foregoing solution, the terminal device logs the reported information when the terminal device is in the first state in the state set; otherwise, the terminal device stops logging, and sends the reported information to the network side device. It may be considered that there is a coverage hole when the terminal device is in the first state, so that the terminal device in the first state logs and reports the coverage hole when meeting the logging condition. Compared with Manner 1 and Manner 2 in specific implementations, this solution improves flexibility of learning of a cell coverage situation by the network side device. In addition, compared with Manner 2, this solution avoids a problem that the terminal device cannot log the coverage hole.

In a possible implementation, that a terminal device logs reported information if the terminal device is in a first state in a state set includes:
the terminal device logs the reported information if the terminal device is in the first state and meets a logging condition, where the logging condition includes one or more of the following: a distance condition or a cell state change condition.

In the foregoing solution, the use of the logging condition can avoid a problem that relatively large storage space of the terminal device is occupied by a relatively large amount of reported information logged by the terminal device because the terminal device remains in the first state for a long period of time. In addition, a resource occupied when the terminal device sends the reported information to the network side device may be saved.

In a possible implementation, the reported information includes number-of-times information, and the number-of-times information is used to indicate a quantity of times that the terminal device changes from a second state to the first state; and the second state is a state that is in the any cell selection state, the camped on any cell state, or the camped normally state and that is different from the first state.

In the foregoing solution, the reported information includes the number-of-times information, so that the network side can directly obtain, from the reported information, the quantity of times that the terminal device changes from the second state to the first state.

In a possible implementation, locations at which the terminal device logs the reported information at two neighboring times correspond to a first location and a second location, and the distance condition includes a condition that a distance between the first location and the second location needs to meet.

In the foregoing solution, the distance condition includes the condition that the distance between the first location and the second location needs to meet, so that the distance between the locations (that is, the first location and the second location) at which the terminal device logs the reported information at the two neighboring times is limited.

In a possible implementation, the logging condition further includes a time condition.

In a possible implementation, moments at which the terminal device logs the reported information at two neighboring times correspond to a first moment and a second moment, and the time condition includes a condition that a time difference between the first moment and the second moment needs to meet.

In the foregoing solution, the distance condition includes the condition that the time difference between the first moment and the second moment needs to meet, so that the time difference between the two moments (that is, the first moment and the second moment) at which the terminal device logs the reported information at the two neighboring times is limited.

In a possible implementation, the cell state change condition includes that the terminal device changes from a second state to the first state; and the second state is a state that is in the any cell selection state, the camped on any cell state, or the camped normally state and that is different from the first state.

In the foregoing solution, the cell state change condition includes that the terminal device changes from the second state to the first state, so that a change of the state of the terminal device imposes a limitation on logging the reported information by the terminal device.

In a possible implementation, the first state is the any cell selection state or the camped on any cell state, and the second state is the camped normally state.

In a possible implementation, the method further includes:
the terminal device sends indication information to the network side device in a first RRC message, where the indication information is used to indicate that the reported information has been logged; and
the terminal device receives a second RRC message from the network side device, where the second RRC message is used to request the terminal device to send the reported information.

In a possible implementation, when not receiving configuration information that is sent by the network side device by using a dedicated message, the terminal device logs the reported information, where the configuration information is used to configure the logging condition.

In the foregoing solution, the terminal device may log the reported information before receiving the configuration information that is sent by the network side device by using the dedicated message. In this case, the terminal device may log the reported information without depending on sending a logging interval by the network side.

According to a third aspect, an embodiment of this application provides an information reporting method. The method includes the following steps:

A terminal device logs a first identifier in mobility history information when entering an out-of-service area from a first cell, where the first identifier is used to indicate that the terminal device enters the out-of-service area.

The terminal device sends the mobility history information to a network side device.

In the foregoing solution, the terminal device logs the first identifier in the mobility history information when entering the out-of-service area from the first cell, where the first identifier is used to indicate that the terminal device enters the out-of-service area, and the terminal device sends the mobility history information to the network side device. The out-of-service area may be considered as an area with a coverage hole, so that the terminal device logs the coverage hole in the mobility history information when entering the out-of-service area. Compared with Manner 1 and Manner 2 described above, this solution improves flexibility of learning of a cell coverage situation by the network side device.

In a possible implementation, the method further includes:
the terminal device logs a second identifier in the mobility history information when entering a second cell from the out-of-service area, where the second identifier is used to indicate to the terminal device leaves the out-of-service area.

In the foregoing solution, the terminal device logs the second identifier in the mobility history information when entering the second cell from the out-of-service area, so that completeness of obtaining the cell coverage situation by the network side device by using the mobility history information can be improved.

In a possible implementation, that the terminal device enters the out-of-service area corresponds to that the terminal device is in any cell selection state; and/or that the terminal device enters the out-of-service area corresponds to that the terminal device is in camped on any cell state.

In a possible implementation, the terminal device is in connected mode, and the terminal device is connected to both a serving cell of a master node and a serving cell of a secondary node.

If the first cell is the serving cell of the secondary node, a third cell is the serving cell of the secondary node, and signal quality of the third cell is less than or equal to a quality threshold, the entering an out-of-service area from a first cell includes: entering the third cell from the first cell. In other words, in this case, the terminal device logs the first identifier in the mobility history information.

Optionally, an identifier of the first cell is logged in the mobility history information.

In the foregoing solution, the terminal device logs the identifier of the first cell in the mobility history information if entering the third cell from the first cell, where both the first cell and the third cell are serving cells of the secondary node. This solution resolves a problem that the terminal device cannot log, in the mobility history information, information that a cell served by a secondary node of the terminal device changes.

In the foregoing solution, if the signal quality of the third cell is less than or equal to the quality threshold, the first identifier is logged in the mobility history information, so that the terminal device logs the coverage hole of the secondary node.

According to a fourth aspect, an embodiment of this application provides an information reporting method, applied to a communication system. The communication system includes a first network side device, a second network side device, a first terminal device, and a second terminal device. The second network side device provides the first terminal device with a plurality of candidate cells used for cell handover. The method includes: The first network side device receives a first message sent by the first terminal device, where the first message is used to indicate the first terminal device to select a cell of the second network side device as a target cell. The first network side device sends a second message to the second network side device, where the second message includes cell information of the target cell, and the cell information includes a cell identifier.

In the foregoing solution, the first network side device receives the first message sent by the first terminal device, where the first message includes indication information used to indicate the first terminal device to select the cell of the second network side device as the target cell; and the first network side device sends the second message to the second network side device, where the second message includes the cell information of the target cell, and the cell information includes the cell identifier. In this case, the second network side device can learn of a signal quality situation of the cell by using the second message. Compared with Manner 1 to Manner 3, this solution improves flexibility of learning of the cell coverage situation by the network side device.

In a possible implementation, the first message is further used to indicate cell information of at least one candidate cell in the plurality of candidate cells; and the second message further includes the cell information of the at least one candidate cell.

In the foregoing solution, the first message is further used to indicate the cell information of the at least one candidate cell, and the second message further includes the cell information of the at least one candidate cell, so that the second network side device can learn of a measurement result of the terminal device for a candidate cell.

In a possible implementation, the second message is used by the second network side device to provide, to the second terminal device, a candidate cell used for cell handover.

In a possible implementation, the cell information further includes cell signal information.

In the foregoing solution, the cell information includes the cell signal information, so that the second network side device can obtain more details of a signal situation of a cell.

In a possible implementation, the cell signal information includes a beam identifier and signal quality information corresponding to the beam identifier.

In a possible implementation, the cell signal information further includes signal quality information corresponding to the cell identifier.

According to a fifth aspect, an embodiment of this application further provides an information reporting apparatus, configured to implement the method described in the first aspect. The information reporting apparatus is a terminal device or an information reporting apparatus that supports the terminal device in implementing the method described in the first aspect. For example, the information reporting apparatus includes a chip system. For example, the information reporting apparatus includes a processing module and a sending module.

The processing module is configured to log reported information if a terminal device is in a first state in a state set and meets a logging condition, where the reported information is used to indicate a network coverage situation, the state set includes one or more of the following states: any cell selection state, camped on any cell state, or camped normally state in which signal quality of a serving cell is less than or equal to a quality threshold, and the logging condition includes one or more of the following: a distance condition or a cell state change condition.

The sending module is configured to send the reported information to a network side device.

In a possible implementation, the reported information includes number-of-times information, and the number-of-times information is used to indicate a quantity of times that the terminal device changes from a second state to the first state; and the second state is a state that is in the any cell selection state, the camped on any cell state, or the camped normally state and that is different from the first state.

In a possible implementation, locations at which the terminal device logs the reported information at two neighboring times correspond to a first location and a second location, and the distance condition includes a condition that a distance between the first location and the second location needs to meet.

In a possible implementation, the logging condition further includes a time condition.

In a possible implementation, moments at which the terminal device logs the reported information at two neighboring times correspond to a first moment and a second moment, and the time condition includes a condition that a time difference between the first moment and the second moment needs to meet.

In a possible implementation, the cell state change condition includes that the terminal device changes from a second state to the first state; and the second state is a state that is in the any cell selection state, the camped on any cell state, or the camped normally state and that is different from the first state.

In a possible implementation, the first state is the any cell selection state or the camped on any cell state, and the second state is the camped normally state.

In a possible implementation, the sending module is further configured to send indication information to the network side device in a first radio resource control RRC message, where the indication information is used to indicate that the reported information has been logged.

The apparatus further includes a receiving module, configured to receive a second RRC message from the network side device, where the second RRC message is used to request the terminal device to send the reported information.

In a possible implementation, that the processing module is configured to log reported information specifically includes:

When configuration information that is sent by the network side device by using a dedicated message is not received, logging the reported information, where the configuration information is used to configure the logging condition.

According to a sixth aspect, an embodiment of this application further provides an information reporting apparatus, configured to implement the method described in the second aspect. The information reporting apparatus is a terminal device or an information reporting apparatus that supports the terminal device in implementing the method described in the second aspect. For example, the information reporting apparatus includes a chip system. For example, the information reporting apparatus includes a processing module and a sending module.

The processing module is configured to log reported information if a terminal device is in a first state in a state set, where the reported information is used to indicate a network coverage situation, and the state set includes one or more of the following states: any cell selection state, camped on any cell state, or camped normally state in which signal quality of a serving cell is less than or equal to a quality threshold.

The processing module is further configured to: otherwise, stop logging the reported information.

The sending module is configured to send the reported information to a network side device.

In a possible implementation, that the processing module is configured to log reported information if a terminal device is in a first state in a state set specifically includes: logging the reported information if the terminal device is in the first state and meets a logging condition, where the logging condition includes one or more of the following: a distance condition or a cell state change condition.

In a possible implementation, the reported information includes number-of-times information, and the number-of-times information is used to indicate a quantity of times that the terminal device changes from a second state to the first state; and the second state is a state that is in the any cell selection state, the camped on any cell state, or the camped normally state and that is different from the first state.

In a possible implementation, locations at which the terminal device logs the reported information at two neighboring times correspond to a first location and a second location, and the distance condition includes a condition that a distance between the first location and the second location needs to meet.

In a possible implementation, the logging condition further includes a time condition.

In a possible implementation, moments at which the terminal device logs the reported information at two neighboring times correspond to a first moment and a second moment, and the time condition includes a condition that a time difference between the first moment and the second moment needs to meet.

In a possible implementation, the cell state change condition includes that the terminal device changes from a second state to the first state; and the second state is a state that is in the any cell selection state, the camped on any cell state, or the camped normally state and that is different from the first state.

In a possible implementation, the first state is the any cell selection state or the camped on any cell state, and the second state is the camped normally state.

In a possible implementation, the sending module is further configured to send indication information to the network side device in a first radio resource control RRC message, where the indication information is used to indicate that the reported information has been logged.

The apparatus further includes a receiving module, configured to receive a second RRC message from the network side device, where the second RRC message is used to request the terminal device to send the reported information.

In a possible implementation, that the processing module is configured to log reported information specifically includes:

When configuration information that is sent by the network side device by using a dedicated message is not received, logging the reported information, where the configuration information is used to configure the logging condition.

According to a seventh aspect, an embodiment of this application further provides an information reporting apparatus, configured to implement the method described in the third aspect. The information reporting apparatus is a terminal device or an information reporting apparatus that supports the terminal device in implementing the method described in the third aspect. For example, the information reporting apparatus includes a chip system. For example, the information reporting apparatus includes a processing module and a sending module.

The processing module is configured to log a first identifier in mobility history information when the terminal device enters an out-of-service area from a first cell, where the first identifier is used to indicate that the terminal device enters the out-of-service area.

The sending module is configured to send the mobility history information to a network side device.

In a possible implementation, the processing module is further configured to log a second identifier in the mobility history information when the terminal device enters a second cell from the out-of-service area, where the second identifier is used to indicate that the terminal device leaves the out-of-service area.

In a possible implementation, that the terminal device enters the out-of-service area corresponds to that the terminal device is in any cell selection state; and/or that the terminal device enters the out-of-service area corresponds to that the terminal device is in camped on any cell state.

In a possible implementation, the terminal device is in connected mode, and the terminal device is connected to both a serving cell of a master node and a serving cell of a secondary node.

If the first cell is the serving cell of the secondary node, a third cell is the serving cell of the secondary node, and signal quality of the third cell is less than or equal to a quality threshold, the entering an out-of-service area from a first cell includes: entering the third cell from the first cell. In other words, in this case, the terminal device logs the first identifier in the mobility history information.

Optionally, the processing module is configured to log an identifier of the first cell in the mobility history information.

According to an eighth aspect, an embodiment of this application further provides an information reporting apparatus, configured to implement the method described in the fourth aspect. The information reporting apparatus is a network side device or an information reporting apparatus that supports the network side device in implementing the method described in the fourth aspect. For example, the information reporting apparatus includes a chip system. For example, the information reporting apparatus includes a processing module, a sending module, and a receiving module.

The processing module is configured to receive, by using the receiving module, a first message sent by a first terminal device, where the first message is used to indicate that the first terminal device selects a cell of a second network side device as a target cell.

The processing module is further configured to send a second message to the second network side device by using the sending module, where the second message includes cell information of the target cell, and the cell information includes a cell identifier.

In a possible implementation, the first message is further used to indicate cell information of at least one candidate cell in a plurality of candidate cells.

The second message further includes the cell information of the at least one candidate cell.

In a possible implementation, the second message is used by the second network side device to provide, to a second terminal device, a candidate cell used for cell handover.

In a possible implementation, the cell information further includes cell signal information.

In a possible implementation, the cell signal information includes a beam identifier and signal quality information corresponding to the beam identifier.

In a possible implementation, the cell signal information further includes signal quality information corresponding to the cell identifier.

According to a ninth aspect, an embodiment of this application provides a terminal device. The terminal device has a function of implementing actions of the terminal device in the method according to the first aspect. The function may be implemented by hardware, or may be implemented by hardware by executing corresponding software. The hardware or software includes one or more modules corresponding to the function. The module may be software and/or hardware.

In a possible implementation, a structure of the terminal device includes a processor and a transmitter. The processor is configured to log reported information if the terminal device is in a first state in a state set and meets a logging condition, where the reported information is used to indicate a network coverage situation, the state set includes one or more of the following states: any cell selection state, camped on any cell state, or camped normally state in which signal quality of a serving cell is less than or equal to a quality threshold, and the logging condition includes one or more of the following: a distance condition or a cell state change condition. The transmitter is configured to send the reported information to a network side device.

In a possible implementation, the reported information includes number-of-times information, and the number-of-times information is used to indicate a quantity of times that the terminal device changes from a second state to the first state; and the second state is a state that is in the any cell selection state, the camped on any cell state, or the camped normally state and that is different from the first state.

In a possible implementation, locations at which the terminal device logs the reported information at two neighboring times correspond to a first location and a second location, and the distance condition includes a condition that a distance between the first location and the second location needs to meet.

In a possible implementation, the logging condition further includes a time condition.

In a possible implementation, moments at which the terminal device logs the reported information at two neighboring times correspond to a first moment and a second moment, and the time condition includes a condition that a time difference between the first moment and the second moment needs to meet.

In a possible implementation, the cell state change condition includes that the terminal device changes from a second state to the first state; and the second state is a state that is in the any cell selection state, the camped on any cell state, or the camped normally state and that is different from the first state.

In a possible implementation, the first state is the any cell selection state or the camped on any cell state, and the second state is the camped normally state.

In a possible implementation, the transmitter is further configured to send indication information to the network side device in a first radio resource control RRC message, where the indication information is used to indicate that the reported information has been logged.

The apparatus further includes a receiver, configured to receive a second RRC message from the network side device, where the second RRC message is used to request the terminal device to send the reported information.

In a possible implementation, that the processor is configured to log reported information specifically includes:

When configuration information that is sent by the network side device by using a dedicated message is not received, logging the reported information, where the configuration information is used to configure the logging condition.

According to a tenth aspect, an embodiment of this application provides a terminal device. The terminal device has a function of implementing actions of the terminal device in the method according to the second aspect. The function may be implemented by hardware, or may be implemented by hardware by executing corresponding software. The hardware or software includes one or more modules corresponding to the function. The module may be software and/or hardware.

In a possible implementation, a structure of the terminal device includes a processor and a transmitter. The processor is configured to log reported information if the terminal device is in a first state in a state set, where the reported information is used to indicate a network coverage situation, and the state set includes one or more of the following states: any cell selection state, camped on any cell state, or camped normally state in which signal quality of a serving cell is less than or equal to a quality threshold.

The processor is further configured to: otherwise, stop logging the reported information.

The transmitter is configured to send the reported information to a network side device.

In a possible implementation, that the processor is configured to log reported information if the terminal device is in a first state in a state set specifically includes: logging the reported information if the terminal device is in the first state and meets a logging condition, where the logging condition includes one or more of the following: a distance condition or a cell state change condition.

In a possible implementation, the reported information includes number-of-times information, and the number-of-times information is used to indicate a quantity of times that the terminal device changes from a second state to the first state; and the second state is a state that is in the any cell selection state, the camped on any cell state, or the camped normally state and that is different from the first state.

In a possible implementation, locations at which the terminal device logs the reported information at two neighboring times correspond to a first location and a second location, and the distance condition includes a condition that a distance between the first location and the second location needs to meet.

In a possible implementation, the logging condition further includes a time condition.

In a possible implementation, moments at which the terminal device logs the reported information at two neighboring times correspond to a first moment and a second moment, and the time condition includes a condition that a time difference between the first moment and the second moment needs to meet.

In a possible implementation, the cell state change condition includes that the terminal device changes from a second state to the first state; and the second state is a state that is in the any cell selection state, the camped on any cell state, or the camped normally state and that is different from the first state.

In a possible implementation, the first state is the any cell selection state or the camped on any cell state, and the second state is the camped normally state.

In a possible implementation, the transmitter is further configured to send indication information to the network side device in a first radio resource control RRC message, where the indication information is used to indicate that the reported information has been logged.

The apparatus further includes a receiver, configured to receive a second RRC message from the network side device, where the second RRC message is used to request the terminal device to send the reported information.

In a possible implementation, that the processor is configured to log reported information specifically includes:

When configuration information that is sent by the network side device by using a dedicated message is not received, logging the reported information, where the configuration information is used to configure the logging condition.

According to an eleventh aspect, an embodiment of this application provides a terminal device. The terminal device has a function of implementing actions of the terminal device in the method according to the third aspect. The function may be implemented by hardware, or may be implemented by hardware by executing corresponding software. The hardware or software includes one or more modules corresponding to the function. The module may be software and/or hardware.

In a possible implementation, a structure of the terminal device includes a processor and a transmitter. The processor is configured to log a first identifier in mobility history information when the terminal device enters an out-of-service area from a first cell, where the first identifier is used to indicate that the terminal device enters the out-of-service area.

The transmitter is configured to send the mobility history information to a network side device.

In a possible implementation, the processor is further configured to log, by the device, a second identifier in the mobility history information when the terminal device enters a second cell from the out-of-service area, where the second identifier is used to indicate that the terminal device leaves the out-of-service area.

In a possible implementation, that the terminal device enters the out-of-service area corresponds to that the terminal device is in any cell selection state; and/or that the terminal device enters the out-of-service area corresponds to that the terminal device is in camped on any cell state.

In a possible implementation, the terminal device is in connected mode, and the terminal device is connected to both a serving cell of a master node and a serving cell of a secondary node.

If the first cell is the serving cell of the secondary node, a third cell is the serving cell of secondary node, and signal quality of the third cell is less than or equal to a quality threshold, the entering an out-of-service area from a first cell includes: entering the third cell from the first cell. In other words, in this case, the terminal device logs the first identifier in the mobility history information.

Optionally, the processor is further configured to log an identifier of the first cell in the mobility history information.

According to a twelfth aspect, an embodiment of this application provides a terminal device. The terminal device has a function of implementing actions of the first network side device in the method according to the fourth aspect. The function may be implemented by hardware, or may be implemented by hardware by executing corresponding software. The hardware or software includes one or more modules corresponding to the function. The module may be software and/or hardware.

In a possible implementation, a structure of the network device includes a processor, a receiver, and a transmitter. The processor is configured to receive, by using the receiver, a first message sent by a first terminal device, where the first message is used to indicate that the first terminal device selects a cell of a second network side device as a target cell.

The processor is further configured to send a second message to the second network side device by using the transmitter, where the second message includes cell information of the target cell, and the cell information includes a cell identifier.

In a possible implementation, the first message is further used to indicate cell information of at least one candidate cell in a plurality of candidate cells.

The second message further includes the cell information of the at least one candidate cell.

In a possible implementation, the second message is used by the second network side device to provide, to a second terminal device, a candidate cell used for cell handover.

In a possible implementation, the cell information further includes cell signal information.

In a possible implementation, the cell signal information includes a beam identifier and signal quality information corresponding to the beam identifier.

In a possible implementation, the cell signal information further includes signal quality information corresponding to the cell identifier.

According to a thirteenth aspect, an embodiment of this application further provides a computer-readable storage medium, including computer software instructions. When the computer software instructions are run in an information reporting apparatus, the information reporting apparatus is enabled to perform the method according to the first aspect.

According to a fourteenth aspect, an embodiment of this application further provides a computer-readable storage medium, including computer software instructions. When the computer software instructions are run in an information reporting apparatus, the information reporting apparatus is enabled to perform the method according to the second aspect.

According to a fifteenth aspect, an embodiment of this application further provides a computer-readable storage medium, including computer software instructions. When the computer software instructions are run in an information reporting apparatus, the information reporting apparatus is enabled to perform the method according to the third aspect.

According to a sixteenth aspect, an embodiment of this application further provides a computer-readable storage medium, including computer software instructions. When the computer software instructions are run in an information reporting apparatus, the information reporting apparatus is enabled to perform the method according to the fourth aspect.

According to a seventeenth aspect, an embodiment of this application further provides a computer program product including instructions. When the computer program product runs in an information reporting apparatus, the information reporting apparatus is enabled to perform the method according to the first aspect.

According to an eighteenth aspect, an embodiment of this application further provides a computer program product including instructions. When the computer program product runs in an information reporting apparatus, the information reporting apparatus is enabled to perform the method according to the second aspect.

According to a nineteenth aspect, an embodiment of this application further provides a computer program product including instructions. When the computer program product runs in an information reporting apparatus, the information reporting apparatus is enabled to perform the method according to the third aspect.

According to a twentieth aspect, an embodiment of this application further provides a computer program product including instructions. When the computer program product runs in an information reporting apparatus, the information reporting apparatus is enabled to perform the method according to the fourth aspect.

According to a twenty-first aspect, an embodiment of this application provides a chip system. The chip system includes a processor, and may further include a memory, configured to implement the function of the network device or the terminal device in the foregoing methods. The chip system may include a chip, or may include a chip and another discrete component.

In addition, for technical effects brought by the design manners of any one of the foregoing aspects, refer to technical effects brought by different design manners of the first aspect to the fourth aspect. Details are not described herein.

In the embodiments of this application, names of the terminal device and the network device constitute no limitation on the devices. In actual implementation, these devices may appear with other names. Provided that functions of the devices are similar to those in the embodiments of this application, the devices fall within the scope of the claims of this application and their equivalent technologies.

### BRIEF DESCRIPTION OF DRAWINGS

FIG. 1 is a schematic diagram of an application architecture according to an embodiment of this application;
FIG. 2 is a schematic flowchart of an information reporting method according to an embodiment of this application;
FIG. 3 is a schematic flowchart of sending reported information by a terminal device to a network side device according to an embodiment of this application;
FIG. 4 is a schematic flowchart of an information reporting method according to another embodiment of this application;
FIG. 5 is a schematic architectural diagram of communication between one terminal device and a plurality of base stations in a related technology;
FIG. 6 is a schematic diagram of a principle of information separation of a master node and a secondary node in a related technology;
FIG. 7 is a schematic diagram of a principle of communication and interaction between one terminal device and a plurality of base stations in a related technology;
FIG. 8 is a schematic flowchart of an information reporting method according to still another embodiment of this application;
FIG. 9A and FIG. 9B are schematic diagrams of handover procedures of a terminal device in a related technology;
FIG. 10 is a schematic flowchart of an information reporting method according to still another embodiment of this application;
FIG. 11 is a schematic diagram of a communication system to which the method embodiment shown in FIG. 10 is applied;
FIG. 12 is a schematic diagram of exchange between a first message and a second message according to an embodiment of this application;
FIG. 13 is a schematic structural diagram of an information reporting apparatus 1300 according to an embodiment of this application;
FIG. 14 is a schematic structural diagram of an information reporting apparatus 1400 according to an embodiment of this application;
FIG. 15 is a schematic structural diagram of an information reporting apparatus 1500 according to an embodiment of this application;
FIG. 16 is a schematic structural diagram of an information reporting apparatus 1600 according to an embodiment of this application;
FIG. 17 is a schematic structural diagram of a terminal device according to an embodiment of this application; and
FIG. 18 is a schematic structural diagram of a network side device according to this application.

### DESCRIPTION OF EMBODIMENTS

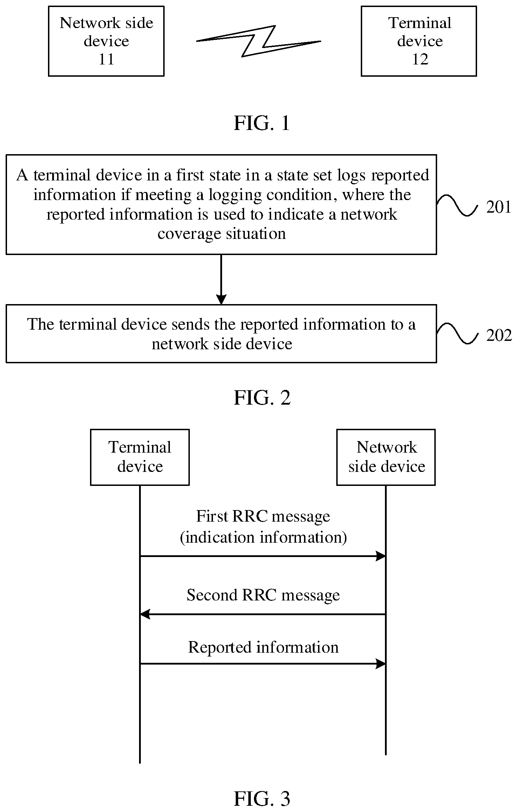

FIG. 1 is a schematic diagram of an application architecture according to embodiments of this application. As shown in FIG. 1, the application scenario may include a network side device 11 and a terminal device 12. The network side device 11 may communicate with the terminal device 12.

The technical solutions of the embodiments of this application may be used in various communication systems, for example, a global system for mobile communications (global system for mobile communications, GSM) system, a code division multiple access (Code Division Multiple Access, CDMA) system, a wideband code division multiple access (Wideband Code Division Multiple Access, WCDMA) system, a general packet radio service (general packet radio service, GPRS), a long term evolution (Long Term Evolution, LTE) system, an LTE frequency division duplex (frequency division duplex, FDD) system, an LTE time division duplex (time division duplex, TDD) system, a universal mobile telecommunications system (Universal Mobile Telecommunication System, UMTS), a worldwide interoperability for microwave access (Worldwide Interoperability for Microwave Access, WiMAX) communication system, a future 5th generation (5th generation, 5G) system, or a new radio (new radio, NR) system.

A terminal device in the embodiments of this application may be user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network, a terminal device in a future evolved public land mobile network (public land mobile network, PLMN), a terminal device in an NR communication system, or the like. This is not limited in the embodiments of this application.

By way of example, but not limitation, the terminal device in the embodiments of this application may alternatively be a wearable device. The wearable device may also be referred to as a wearable intelligent device, and is a generic term for wearable devices such as glasses, gloves, watches, clothes, and shoes that are developed by applying wearable technologies to intelligent designs of daily wear. The wearable device is a portable device that is directly worn on a body or integrated into clothes or an accessory of the user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

A network side device in the embodiments of this application may be a device configured to communicate with the terminal device. The network side device may be a base transceiver station (base transceiver station, BTS) in a global system for mobile communications (global system for mobile communications, GSM) system or a code division multiple access (Code Division Multiple Access, CDMA) system, a NodeB (NodeB, NB) in a wideband code division multiple access (Wideband Code Division Multiple Access, WCDMA) system, an evolved NodeB (evolved NodeB, eNB or eNodeB) in an LTE system, or a radio controller in a cloud radio access network (cloud radio access network, C-RAN) scenario. Alternatively, the network side device may be a relay station, an access point, a vehicle-mounted device, a wearable device, a network side device in a future 5G network, a network side device in a future evolved PLMN network, a new generation NodeB (new generation NodeB, gNodeB) in an NR system, or the like. This is not limited in the embodiments of this application.

In addition, in the embodiments of this application, the network side device provides a service for a cell, and the terminal device communicates with the network side device by using a transmission resource (for example, a frequency domain resource or a spectrum resource) used by the cell. The cell may be a cell corresponding to the network side device (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage areas and low transmit power, and are applicable to providing a high-rate data transmission service. It should be noted that transmission in the embodiments of this application may include sending and/or receiving. For example, the terminal device may send data to the network side device by using a transmission resource 1, and/or the terminal device may receive data from the network side device by using a transmission resource 2.

In the embodiments of this application, the terminal device or the network side device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant communication software. In addition, a specific structure of an execution body of a method provided in the embodiments of this application is not specifically limited in the embodiments of this application, provided that a program that logs code for the method provided in the embodiments of this application can be run to perform communication according to the method provided in the embodiments of this application. For example, the method provided in the embodiments of this application may be performed by the terminal device or the network side device, or a function module that is in the terminal device or the network side device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but are not limited to a radio channel and various other media that can store, include, and/or carry instructions and/or data.

The following describes in detail some implementations of the embodiments of this application with reference to the accompanying drawings. In a case of no conflict, the following embodiments and features in the embodiments may be mutually combined.

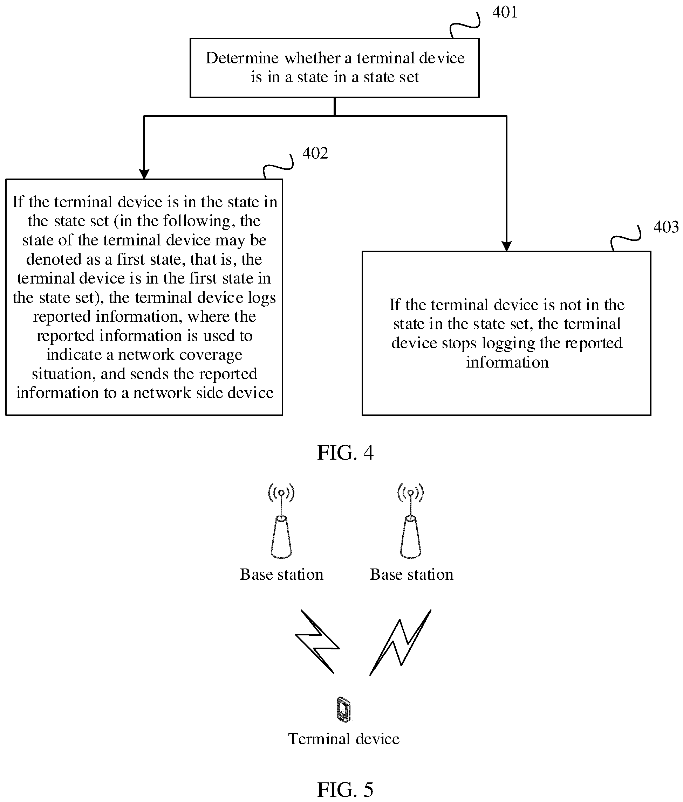

The following first describes related content in the embodiments shown in FIG. 2 and FIG. 4 in this application.

Currently, a network side device may collect information (Manner 1 and Manner 2) from a terminal device by using the following minimization of drive tests (Minimization of Drive-Tests, MDT) technology, to learn of a network coverage situation.

A basic idea of the MDT technology is that an operator replaces some conventional drive test work with measurement reporting that is performed by a commercial terminal device of a subscribed user, to automatically collect terminal measurement data, to detect and optimize a problem and a fault in a wireless network. The MDT includes logged (logged) MDT and immediate (immediate) MDT. The immediate MDT is measurement mainly specific to a terminal device in radio resource control (Radio Resource Control, RRC) connected mode, and the logged MDT is measurement mainly specific to a terminal device in idle mode. The immediate MDT may be used to measure a data volume, an internet protocol (Internet Protocol, IP) throughput, a packet transmission delay, a packet loss rate, a processing delay, and the like of the terminal device, and the logged MDT may be used by the terminal device to measure received signal strength.

For the logged MDT, the network side device may send a logging interval (logged interval) to the terminal device by using a dedicated message. The logging interval may be used to trigger a function of the terminal device to log reported information. The network side device may further send a total time length that the logging lasts, for example, 24 hours, to the terminal device. For example, it is assumed that the logging interval is 10 minutes and the lasting total time length is 10 hours. In this case, it may indicate that a measurement result is logged every 10 minutes within 10 hours. After receiving the logging interval sent by the network side device, the terminal device may log the obtained information at the logging interval. Optionally, a manner of obtaining the information by the terminal device may include: obtaining the information through measurement (for example, obtaining signal quality through measurement), obtaining the information by using an internal variable (for example, obtaining that the terminal device is in any cell selection state by reading a variable value of the internal variable), or obtaining the information by receiving a message (for example, obtaining a current state by receiving a message). Herein, the dedicated message may be a message dedicated to communication between the network side device and a specific terminal device. In addition, in a related technology, the network side device sends the logging interval to the terminal device by using the dedicated message. It can be learned from the above that the network side device needs to select the terminal device that logs and sends the reported information.

In a current technology, when the network side device does not send the logging interval to the terminal device, the terminal device does not log the obtained information. After the network side device sends the logging interval to the terminal device, the terminal device may enable, based on the logging interval, the function of the terminal device to log the reported information. Specific logging manners may be as follows:
Manner 1: When the terminal device is in the any cell selection (any cell selection) state, it may be logged that the terminal device is in the any cell selection state.
Manner 2: When the terminal device is in camped normally state (camped normally state), the terminal device logs the information obtained by the terminal device (for example, the terminal device logs information obtained by measuring a frequency corresponding to a currently camped cell, and in an example, the obtained information may include at least one of signal quality of the current cell, signal quality of a neighboring cell of the current cell, current location information). The terminal device stops logging when the terminal device is in camped on any cell state (camped on any cell state).

In addition, that the terminal device is in the any cell selection state may indicate that the terminal device does not find a suitable cell (suitable cell) or does not find an acceptable cell (acceptable cell). Therefore, that the terminal device is in the any cell selection state indicates that the terminal device is currently in a coverage hole.

It should be noted that, in the embodiments of this application, the coverage hole and normal coverage are opposite concepts. That an area is normally covered may be understood as that there is no coverage hole in the area, and a terminal device and a network side device in the area may reliably communicate with each other through a radio channel. That an area is not normally covered may be understood as that there is a coverage hole in the area, and a terminal device and a network side device in the area cannot reliably communicate with each other through a radio channel.

However, in Manner 1 and Manner 2, when the terminal device logs the obtained information, a condition of sending the logging interval by the network side device to the terminal device needs to be met.

FIG. 2 is a schematic flowchart of an information reporting method according to an embodiment of this application. This embodiment may be performed by a terminal device. As shown in FIG. 2, the method in this embodiment may include the following steps.

Step 201: The terminal device in a first state in a state set logs reported information if meeting a logging condition, where the reported information is used to indicate a network coverage situation.

In this step, the first state may be a state in the state set, and the state set includes one or more of the following states: any cell selection state (any cell selection state), camped on any cell state (camped on any cell state), or camped normally state (camped normally state) in which signal quality of a serving cell is less than or equal to a quality threshold. Herein, when the terminal device is in the any cell selection state or the camped on any cell state, it may be considered that there is a coverage hole. When the terminal device is in the camped normally state in which the signal quality of the serving cell is less than or equal to the quality threshold, it may indicate that although the terminal device normally camps on a cell, signal quality of the cell is extremely poor. That is, it can also be considered that there is a coverage hole.

It should be noted that, when the state set does not include the camped normally state in which the signal quality of the serving cell is less than or equal to the quality threshold, it may be understood that the state set does not include the camped normally state. When the state set includes the camped normally state in which the signal quality of the serving cell is less than or equal to the quality threshold, it may be understood that the state set does not include camped normally state in which the signal quality of the serving cell is greater than the quality threshold.

The reported information may be specifically any type of related information that can be obtained by the terminal device and that may be used to represent a network coverage situation. The reported information may include, for example, signal quality information obtained through signal measurement, and may include, for another example, location information obtained by using a global positioning system (global positioning system, GPS) module. Optionally, for the terminal device that is in the any cell selection state or the camped on any cell state, the reported information may specifically include current time information of the terminal device, current location information of the terminal device, and/or information used to represent a current state (for example, the any cell selection state) of the terminal device. Optionally, for the camped on any cell state, the reported information may further include some information about the camped on any cell state. For example, a currently camped cell belongs to another public land mobile network (public land mobile network, PLMN) (that is, does not belong to a PLMN selected by the terminal device, a PLMN registered by the terminal device, or an equivalent PLMN), or a tracking area (tracking area, TA) of the currently camped cell belongs to a forbidden TA. Optionally, it may be further specified in the protocol that logging is performed only when the first state is the camped on any cell state and the currently camped cell belongs to the another public land mobile network. Optionally, for the terminal device that is in the camped normally state in which the signal quality of the serving cell is less than or equal to the quality threshold, the reported information may specifically include one or more of the following: current time information of the terminal device, current location information of the terminal device, or signal quality information of the serving cell.

It should be noted that, that X includes X1 and/or X2 in this embodiment of this application may be understood as: X includes X1 but does not include X2; X includes X2 but does not include X1; or X includes X1 and includes X2.

Optionally, the reported information may include number-of-times information, and the number-of-times information is used to indicate a quantity of times that the terminal device changes from a second state to the first state. It should be noted that, for specific descriptions of the second state, refer to related descriptions above, and details are not described herein again. Herein, the reported information includes the number-of-times information, so that the network side can directly obtain, from the reported information, the quantity of times that the terminal device changes from the second state to the first state. Specifically, if the terminal device in the first state in the state set meets the logging condition, the terminal device logs the obtained information (that is, logs the reported information). It should be noted that, when the terminal device in the first state does not meet the logging condition, the terminal may stop logging the obtained information, that is, the device may not log the obtained information. The terminal device not in the first state may log the reported information, or may stop logging. This is not limited in this application. In addition, a specific logging manner used by the terminal device not in the first state to log the reported information may be the same as or similar to the foregoing logging manner. This is not limited in this application, either.

The logging condition may be considered as a condition that the terminal device in the first state needs to meet to log the reported information, and the logging condition includes one or more of the following: a distance condition, a time condition, or a cell state change condition.

Optionally, the logging condition may be a condition predefined by the terminal device, may be a condition preconfigured by the terminal device, or may be a condition configured by the network side. The logging condition may be sent to the terminal device and the like by using a message. This may not be limited in this application.

Herein, the distance condition may be related to a distance parameter. Optionally, locations at which the terminal device logs the reported information at two neighboring times correspond to a first location and a second location. In other words, the terminal device logs the reported information at the first location and the second location, and the two logs are two neighboring logs. The distance condition includes a condition that a distance between the first location and the second location needs to meet. For example, it is assumed that the distance condition includes a condition that the distance between the first location and the second location is greater than 20 meters. In this case, when a distance between a current location of the terminal device and a corresponding location at which the terminal device logs the reported information last time is 10 meters, it may indicate that the distance condition in the logging condition is not met. When a distance between a current location of the terminal device and a corresponding location at which the terminal device logs the reported information last time is 21 meters, it may indicate that the distance condition in the logging condition is met.

Herein, the time condition may be related to a time parameter. Optionally, moments at which the terminal device logs the reported information at two neighboring times correspond to a first moment and a second moment. In other words, the terminal device logs the reported information at the first moment and the second moment, and the two logs are two neighboring logs. The time condition includes a condition that a time difference between the first moment and the second moment needs to meet. For example, it is assumed that the time condition includes a condition that the time difference between the first moment and the second moment is greater than 15 minutes. When a time difference between a current moment of the terminal device and a corresponding moment at which the terminal device logs the reported information last time is 5 minutes, it may indicate that the time condition in the logging condition is not met. When a time difference between a current moment of the terminal device and a corresponding moment at which the terminal device logs the reported information last time is 20 minutes, it may indicate that the time condition in the logging condition is met.

Herein, the cell state change condition may be related to a cell state change. Optionally, the cell state change condition includes that the terminal device changes from a second state to the first state; and the second state is a state that is in the any cell selection state, the camped on any cell state, or the camped normally state and that is different from the first state. It should be noted that the second state may be a state in the state set, or may not be a state in the state set. This may not be limited in this application.

For example, when the state set includes the any cell selection state, and the first state is the any cell selection state, the second state may be the camped normally state. In this case, the camped normally state is not included in the state set herein.

For another example, it is assumed that the state set includes the any cell selection state and the camped on any cell state. When the first state is the camped on any cell state, the second state may be the any cell selection state or the camped normally state. When the first state is the any cell selection state, the second state may be the camped normally state. It may be understood that the cell state change condition may include: a condition 1 that the terminal device changes from the any cell selection state or the camped normally state to the camped on any cell state, or a condition 2 that the terminal device changes from the camped normally state to the any cell selection state. When the first state is the camped on any cell state, the condition 1 in the cell state change condition may be used for determining. When the first state is the any cell selection state, the condition 2 in the cell state change condition may be used for determining.

For example, the first state is the any cell selection state or the camped on any cell state, and the second state is the camped normally state.

Optionally, the logging condition may further include a cell enabling condition. The cell enabling condition is used to indicate that the network side device enables a function of the terminal device in the first state in a cell to log the reported information. Optionally, the network side device may include a first indication to broadcast information of the cell. The first indication may be used to enable (enable) the function of the terminal device in the first state in the cell to log the reported information. Alternatively, the network side device may include a second indication to the broadcast information of the cell. The second indication may be used to disable (disenable) the function of the terminal device in the first state in the cell as to logging the reported information. The cell enabling condition is set, so that when the network side has determined in advance that there is a coverage hole in a cell, the terminal device can be prevented from logging the coverage hole of the cell, thereby reducing an amount of information logged by the terminal device.

It should be noted that, when the logging condition includes a plurality of specific conditions, when the plurality of conditions are all met, it may be considered that the logging condition is satisfied, or when any one of the plurality of conditions is not met, it may be considered that the logging condition is not met. For example, it is assumed that the logging condition includes a distance condition and a time condition. When the distance condition is met but the time condition is not met, or the time condition is met but the distance condition is not met, it may indicate that the logging condition is not met. When both the distance condition and the time condition are met, it may indicate that the logging condition is met.

In this embodiment of this application, the terminal device in the first state can determine, based on the logging condition, whether to log the reported information each time the terminal device obtains the information. This can avoid a problem that relatively large storage space of the terminal device is occupied caused when the terminal device in the first state logs the information obtained each time and logs a relatively large amount of reported information. In addition, a resource occupied when the terminal device sends the reported information to the network side device may be saved.

To avoid dependency of logging the foregoing reported information by the terminal device on sending the logging interval by the network side caused because the network side device selects the terminal device that logs and reports the information, in Manner 1 and Manner 2, the terminal device logs the reported information only after the network side sends the foregoing logging interval. Consequently, the coverage hole cannot be logged by the terminal device in time, and the network side cannot find the coverage hole in time. Optionally, the terminal device may log the reported information before receiving configuration information that is sent by the network side device by using a dedicated message. The configuration information is used to configure the logging condition. In this case, the terminal device may log the reported information without depending on sending a logging interval by the network side. It may be understood that in a scenario in which the network side device sends the configuration information to the terminal device by using the dedicated message, the terminal device may send the reported information to the network side device in the manner in this embodiment. Step 202: The terminal device sends the reported information to the network side device.

In this step, a specific manner in which the terminal device sends the reported information to the network side device may not be limited in this application. Optionally, the terminal device may send the reported information to a base station. Further optionally, the base station may further send the reported information to a core network entity or another entity (for example, a network management system or a trace collection entity).

Optionally, as shown in FIG. 3, the terminal device sends indication information to the network side device in a first RRC message, where the indication information is used to indicate that the reported information has been logged. Further, the network side device may send a second RRC message to the terminal device, where the second RRC message is used to request the terminal device to send the reported information (herein, the second RRC message may include information about a resource that is allocated by the network side device to the terminal device and that is used by the terminal device to send the reported information). Then, the terminal device may send, to the network side device, the reported information obtained according to the embodiment in FIG. 2. Optionally, the terminal device may send the reported information to the network side device by using a third RRC message. Optionally, the first RRC message may be a message generated in a process of setting up an RRC connection between the terminal device and the network side device, and may be, for example, an RRC setup complete (RRC Setup Complete) message or an RRC reconfiguration complete (RRC Reconfiguration Complete) message. The second RRC message may be, for example, a user equipment information request (UE Information Request) message. The third RRC message may be, for example, a user equipment information response (UE Information Response) message.

Alternatively, the terminal device may not send the indication information to the network side device, but directly sends, to the network side device, the reported information obtained according to the embodiment in FIG. 2. Optionally, the terminal device may send the reported information to the network side device in the process of setting up the RRC connection to the network side device. For example, the terminal device may include the reported information (for example, the number-of-times information) in the RRC setup complete message or the RRC reconfiguration complete message.

In this embodiment, the terminal device in the first state in the state set logs the reported information if meeting the logging condition, and the terminal device sends the reported information to the network side device. It may be considered that there is a coverage hole when the terminal device is in the first state, so that the terminal device in the first state logs and reports the coverage hole when meeting the logging condition. Compared with Manner 1 and Manner 2 described above, this embodiment improves flexibility of learning of a cell coverage situation by the network side device. In addition, the use of the logging condition can avoid a problem that relatively large storage space of the terminal device is occupied by a relatively large amount of reported information logged by the terminal device because the terminal device remains in the first state for a long period of time. In addition, a resource occupied when the terminal device sends the reported information to the network side device may be saved.

FIG. 4 is a schematic flowchart of an information reporting method according to another embodiment of this application. This embodiment may be performed by a terminal device. As shown in FIG. 4, the method in this embodiment may include the following steps.

Step 401: Determine whether a terminal device is in a state in a state set.

For example, assuming that the state set includes a state 1 and a state 2, and the terminal device is in the state 1 or the state 2, it may be understood that the terminal device is in the state in the state set. For another example, assuming that the state set includes a state 1 and a state 2, and the terminal device is in a state 3, it may be understood that the terminal device is not in the state in the state set.

It should be noted that, for specific content of the state set, refer to related descriptions of step 201, and details are not described herein again.

Step 402: If the terminal device is in the state in the state set (in the following, the state of the terminal device may be denoted as a first state, that is, the terminal device is in the first state in the state set), the terminal device logs reported information, and sends the reported information to a network side device. The reported information is used to indicate a network coverage situation.

In this step, the first state is a state in the state set. For specific content of the reported information, refer to related descriptions of step 201, and details are not described herein again.

Specifically, if the terminal device is in the first state in the state set, the terminal device logs the obtained information (that is, logs the reported information).

Optionally, similar to the embodiment shown in FIG. 2, in step 402, the terminal device in the first state may log the reported information when meeting a specific logging condition. Optionally, step 402 may specifically include: If the terminal device is in the first state and meets a logging condition, log the reported information, where the logging condition includes one or more of the following: a distance condition, a time condition, or a cell state change condition. Herein, if the terminal device is in the first state but does not meet the logging condition, the terminal device may stop logging.

It should be noted that, for specific content of the logging condition, refer to related descriptions of step 201, and details are not described herein again.

Optionally, before sending the reported information to the network side device in step 402, the method may further include: The terminal device sends indication information to the network side device in a first radio resource control RRC message, where the indication information is used to indicate that the reported information has been logged; and the terminal device receives a second RRC message from the network side device, where the second RRC message is used to request the terminal device to send the reported information. It should be noted that a specific manner of sending the reported information to the network side device in this embodiment is similar to step 202, and details are not described herein again.

Step 403: If the terminal device is not in the state in the state set, the terminal device stops logging the reported information.

In this step, specifically, if the terminal device is in another state not in the state set, the terminal may stop logging the obtained information, that is, the device may not log the obtained information.

Optionally, before step 402, the network side device may send notification information to the terminal device, where the notification information is used to notify that the terminal device needs to perform logging when the terminal device is in the first state in the state set.

It can be learned from step 401 to step 403 that, in this embodiment, when the terminal device is in the first state in the state set, the terminal device logs the reported information; otherwise, the terminal device stops logging. It may be considered that there is a coverage hole when the terminal is in the first state, so that the terminal device in the first state logs the coverage hole. Compared with Manner 2, this embodiment avoids a problem that the terminal device cannot log the coverage hole.

Similar to the embodiment shown in FIG. 2, to avoid dependency of logging the foregoing reported information by the terminal device on sending configuration information by the network side, in Manner 1 and Manner 2, the terminal device logs the foregoing reported information only after the network side sends the foregoing configuration information. Consequently, the coverage hole cannot be logged by the terminal device in time, and the network side cannot find the coverage hole in time. Optionally, before not receiving the configuration information sent by the network side device, the terminal device may log the reported information. The configuration information is used to trigger the function of the terminal device to log the reported information. It may be understood that in a scenario in which the network side device sends the configuration information to the terminal device, the terminal device may send the reported information to the network side device in the manner in this embodiment.

In this embodiment, when the terminal device is in the first state in the state set, the terminal device logs the reported information; otherwise, the terminal device stops logging, and the terminal device sends the reported information to the network side device. It may be considered that there is a coverage hole when the terminal device is in the first state, so that the terminal device in the first state logs and reports the coverage hole when meeting the logging condition. Compared with Manner 1 and Manner 2 described above, this embodiment improves flexibility of learning of a cell coverage situation by the network side device. In addition, compared with Manner 2, this embodiment avoids a problem that the terminal device cannot log the coverage hole.

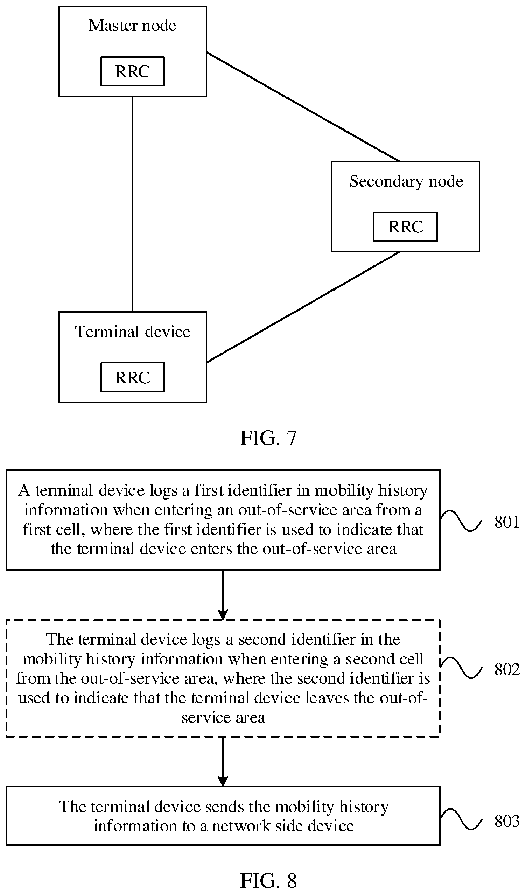

The following first describes related content in the embodiment shown in FIG. 8 in this application.

Currently, the network side device may collect information from the terminal device (Manner 3) based on mobility history information (mobility history information), to learn of a network coverage situation.

Manner 3: In an existing long term evolution (Long Term Evolution, LTE) protocol, when the terminal device has a capability of logging mobility history information (mobility history information), when a serving cell of the terminal device changes or the terminal device enters an out-of-service (out of service) area, the terminal device logs related information of a previous cell (for example, a cell identifier of the previous cell, frequency information of the previous cell, and a time length of camping on the previous cell). When the terminal device enters an LTE cell from the out-of-service area or another standard, the terminal device may log a time length for which the terminal remains outside the LTE cell. In addition, the terminal device notifies the network side of the mobility history information.

In addition, that the terminal device enters the out-of-service area means that the terminal device is in any cell selection state (any cell selection state) or camped on any cell state (camped on any cell state). Therefore, when the terminal device enters the out-of-service area, it may indicate that the terminal device does not find a suitable cell (suitable cell), and therefore, it may also indicate that the terminal device is currently in an area in which there is a coverage hole.

It can be learned that in Manner 3, when the terminal device logs the mobility history information, the terminal device logs related information of a cell in which the terminal device is located when and before a serving cell of the terminal device changes, but does not log the coverage hole.

In addition, as shown in FIG. 5, currently, communication between one terminal device and a plurality of base stations exists, that is, dual-connectivity (dual-connectivity, DC) exists. The plurality of base stations may be base stations of a same standard (for example, all are 4th generation (4th generation, 4G) base stations, or all are 5G base stations), or may be base stations of different standards (for example, one is a 4G base station, and the other is a 5th generation 5G base station). The network side may provide a communication service for the terminal device by using resources of the plurality of base stations, to provide high-rate transmission for the terminal device. For a terminal device, a base station that exchanges control plane signaling with a core network in DC is referred to as a master node (master node, MN), and another base station is referred to as a secondary node (second node, SN).

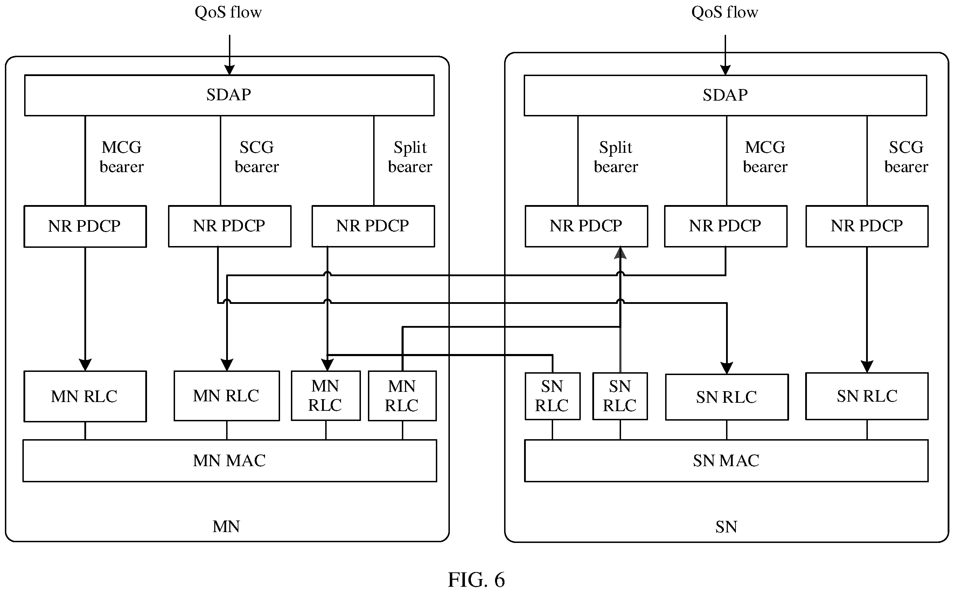

As shown in FIG. 6, that both the master node and the secondary node are connected to a 5G core network is used as an example. Each base station may have radio link layer control (radio link control, RLC)/media access control (media access control, MAC) entities of different standards or a same standard. For example, the master node may be an RLC/MAC entity of an NR standard, and the secondary node may be an RLC/MAC entity of an LTE standard. Data radio bearers (data radio bearer, DRB) in the DC are classified into a master cell group (master cell group, MCG) bearer (Bearer)/a secondary cell group (secondary cell group, SCG) bearer/a split (Split) bearer. The MCG bearer means that a radio link control (radio link control, RLC)/media access control (media access control, MAC) entity of the DRB is on only a master node, and the SCG bearer means that an RLC/MAC entity of the DRB is on only the secondary node, and the split bearer means that an RLC/MAC entity of the DRB is on both the master node and the secondary node.

Referring to FIG. 6, data packets of some quality of service (quality of service, QoS) flows (flow) may be transmitted by using RLC/MAC of a plurality of base stations (for example, a QoS flow carried on the split bearer). Data packets of some QoS flows are transmitted by using RLC/MAC of only one base station (for example, a QoS flow carried on the MCG bearer/an SCG bearer). When a base station directly receives a data packet of a QoS flow from a core network, the base station needs to have a service data adaptation protocol (service data adaptation protocol, SDAP) entity. If the base station receives a data packet by using a packet data convergence protocol (packet data convergence protocol, PDCP) entity of another base station, the base station does not need to have an SDAP entity. In addition, in dual-connectivity formed between different standards, the master node and the secondary node may each have an RRC entity, and may each generate an RRC message (that is, a control message, for example, a measurement message), as shown in FIG. 7. In addition, the secondary node may directly send, to the terminal device, the RRC message generated by the secondary node (in this case, the RRC message is directly sent by the terminal device to the secondary node, and the RRC message between the secondary node and the terminal device is referred to as a signaling radio bearer (signaling radio bearers, SRB) 3). Alternatively, the secondary node may notify the master node of the RRC message generated by the secondary node, and then the master node sends the RRC message to the terminal device (in this case, the terminal device forwards the RRC message of the secondary node to the secondary node by using the master node, that is, the terminal device sends the RRC message to the master node, and then the master node forwards the message to the secondary node).

In addition, for multi-standard dual-connectivity (that is, one terminal device is simultaneously connected to base stations of two communications standards, for example, a 4G base station and a 5G base station), there is a dual-connectivity scenario referred to as a non-standalone (non standalone, NSA) scenario. In the NSA scenario, the secondary node cannot provide a cell for the terminal device to camp on. In other words, the terminal device in idle (idle) mode cannot camp on a cell of the secondary node in the NSA scenario, and the terminal device can camp only on a cell of the master node of a corresponding standard. The NSA generally means that the master node is an LTE base station, and the secondary node is an NR base station.

In Manner 3, the terminal device cannot camp on the cell of the secondary node in the NSA scenario, and the terminal device logs, in the mobility history information, information indicating that the cell on which the terminal device camps changes. Therefore, currently, there is a problem that the network side device cannot learn of a coverage situation of the cell of the secondary node in the NSA scenario. In addition, in the current technology, for a standalone (standalone, SA) scenario that is relative to the NSA scenario in DC, the terminal device in connected mode does not log the information indicating that the cell of the secondary node changes, either. In the SA scenario, the secondary node can provide a cell for the terminal device to camp on. In other words, the terminal device in idle mode may camp on the cell of the secondary node in the SA scenario, or may camp on the cell of the master node.

FIG. 8 is a schematic flowchart of an information reporting method according to still another embodiment of this application. This embodiment may be performed by a terminal device. As shown in FIG. 8, the method in this embodiment may include the following steps.

Step 801: A terminal device logs a first identifier in mobility history information when entering an out-of-service area from a first cell, where the first identifier is used to indicate that the terminal device enters the out-of-service area.

In this step, when the terminal device enters the out-of-service area from the first cell, the terminal device logs, in the mobility history information, the first identifier used to indicate that the terminal device enters the out-of-service area. Herein, the first cell may be understood as a (Previous) serving cell before the terminal device enters the out-of-service area. For example, assuming that the terminal device enters a cell B from a cell A, and then enters the out-of-service area from the cell B, the cell B may be considered as the first cell. The out-of-service area may be considered as an area without coverage or an area with a coverage hole. Optionally, that the terminal device enters the out-of-service area corresponds to that the terminal device is in any cell selection state; and/or that the terminal device enters the out-of-service area corresponds to that the terminal device is in camped on any cell state.

Herein, the terminal device logs the first identifier in the mobility history information when entering the out-of-service area from the first cell. That the terminal device enters the out-of-service area may indicate that the terminal device is currently in an area with a coverage hole. In this way, the terminal device logs the coverage hole in the mobility history information.

In consideration of compatibility with the current mobility history information, optionally, when entering the out-of-service area from the first cell, the terminal device may further log, in the mobility history information, a cell identifier of a previous cell (that is, a serving cell before the terminal device enters the out-of-service area), frequency information of the previous cell, and a time length of camping on the previous cell.

Optionally, the method in this embodiment may further include step 802: The terminal device logs a second identifier in the mobility history information when entering a second cell from the out-of-service area, where the second identifier is used to indicate that the terminal device leaves the out-of-service area. Herein, the second cell may be understood as the first serving cell of the terminal device after the terminal device leaves the out-of-service area. For example, assuming that the terminal device enters a cell C from the out-of-service area, and then enters a cell D from the cell C, the cell C may be considered as the second cell. It should be noted that the second cell may be the same as the first cell, or the second cell may be different from the first cell. This may not be limited in this application.

Implementations of the first identifier and the second identifier may not be limited in this application. For example, the first identifier may be implemented by using a bit (bit) whose value is 1, to indicate that the terminal device enters the out-of-service area, and the second identifier may be implemented by using another bit whose value is 1, to indicate that the terminal device enters the out-of-service area. For another example, the first identifier may be implemented by using a bit whose value is 1, to indicate that the terminal device enters the out-of-service area, and the second identifier may be implemented by using the bit whose value is 0, to indicate that the terminal device enters the out-of-service area.

In consideration of compatibility with the current mobility history information, optionally, when entering the second cell from the out-of-service area, the terminal device may log, in the mobility history information, time for which the terminal device is in the out-of-service area. Further optionally, that the mobility history information logs a time length but does not log a cell identifier corresponding to the time length may be understood as the second identifier used to indicate the terminal device leaves the out-of-service area.

Optionally, the terminal device may further log current time information of the terminal device, current location information of the terminal device, and/or the like in the mobility history information.

To avoid a problem that in a DC scenario, the terminal device cannot log, in the mobility history information, information indicating that a cell served by a secondary node of the terminal changes, optionally, in a scenario in which the terminal device is in connected mode and the terminal device is connected to both a serving cell of a master node and the serving cell of the secondary node, the method in this embodiment is specifically as follows: If entering a third cell from the first cell, the terminal device logs an identifier of the first cell in the mobility history information. In this case, both the first cell and the third cell are serving cells of the secondary node. It may be understood that the first cell and the third cell are different cells, the third cell is a current serving cell of the terminal device, and the first cell may be understood as a previous serving cell of the terminal device. For example, the terminal device enters a cell F from a cell E, and then enters a cell G from the cell F. In one case, the cell E may be considered as the first cell, and the cell F may be considered as the third cell. In another case, the cell F may be considered as the first cell, and the cell G may be considered as the third cell.

Optionally, when entering the third cell from the first cell, the terminal device may further log, in the mobility history information, frequency information of the first cell, a time length of camping on the third cell, and/or the like. To log a coverage hole in the DC scenario, when signal quality of the third cell is less than or equal to a quality threshold, the first identifier is logged in the mobility history information. Herein, that the signal quality of the third cell is less than or equal to the quality threshold may indicate that the signal quality of the third cell is very poor, and it may also be considered, to some extent, that there is a coverage hole, or in other words, an area corresponding to the third cell is an out-of-service area.

Optionally, the terminal device may distinguish, in the mobility history information, cell change information of the master node from cell change information of the secondary node. For example, the terminal device may log, in a list 1, mobility history information corresponding to the cell of the master node, and log, in a list 2, mobility history information corresponding to the cell of the secondary node. Optionally, the mobility history information corresponding to the cell of the master node and the mobility history information corresponding to the cell of the secondary node may be the mobility history information (that is, may include the first identifier) mentioned above in this application, or may be mobility history information (that is, may not include the first identifier) mentioned in a related technology.

Step 803: The terminal device sends the mobility history information to a network side device.

In this step, a specific manner in which the terminal device sends the mobility history information to the network side device may not be limited in this application. Optionally, the terminal device may send the mobility history information to a base station. Further optionally, the base station may send the mobility history information to another entity (for example, a network management system or a trace collection entity).

Optionally, the terminal device may send indication information to the network side device in a first RRC message, where the indication information is used to indicate that the mobility history information has been logged. Further, the network side device may send a second RRC message to the terminal device, where the second RRC message is used to request the terminal device to send the mobility history information (herein, the second RRC message may include information about a resource that is allocated by the network side device to the terminal device and that is used by the terminal device to send the reported information). Then, the terminal device may send the mobility history information to the network side device. Optionally, the terminal device may send the mobility history information to the network side device by using a third RRC message. Optionally, the first RRC message may be a message generated in a process of setting up an RRC connection between the terminal device and the network side device, and may be, for example, an RRC setup complete (RRC Setup Complete) message or an RRC reconfiguration complete (RRC Reconfiguration Complete) message. The second RRC message may be, for example, a user equipment information request (UE Information Request) message. The third RRC message may be, for example, a user equipment information response (UE Information Response) message.

In this embodiment, the terminal device logs the first identifier in the mobility history information when entering the out-of-service area from the first cell, where the first identifier is used to indicate that the terminal device enters the out-of-service area, and the terminal device sends the mobility history information to the network side device. The out-of-service area may be considered as an area with a coverage hole, so that the terminal device logs the coverage hole in the mobility history information when entering the out-of-service area. Compared with Manner 1 and Manner 2 described above, this embodiment improves flexibility of learning of a cell coverage situation by the network side device.

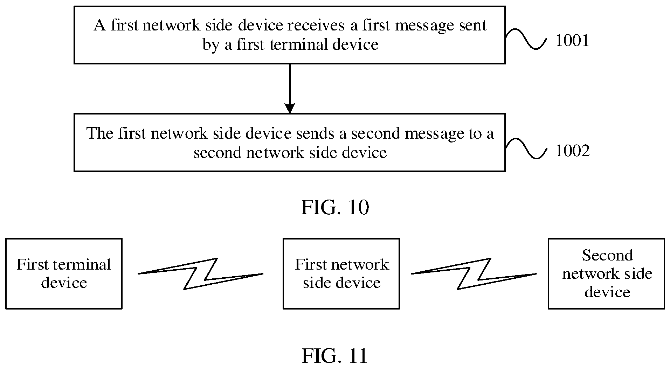

The following first describes related content in the embodiment shown in FIG. 10 in this application.

In addition, currently, a new handover method (which may be referred to as condition handover (condition handover)) is further proposed. A basic principle of the new handover method is as follows: A network side delivers configuration information of some candidate cells to a terminal device in advance (that is, a plurality of candidate cells need to allocate some resources to the terminal device in advance). In this way, when the terminal device detects that a handover condition is met, the terminal device may be directly handed over to a corresponding candidate cell. In the handover method, the network side is required to deliver the configuration information of the plurality of candidate cells to the terminal device in advance. However, the terminal device is actually handed over to only one of the plurality of candidate cells. This causes a waste of resources.

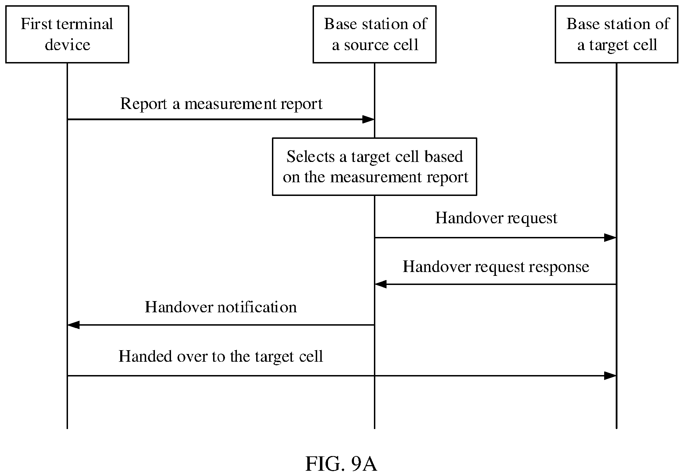

In a conventional handover method, as shown in FIG. 9A, a first terminal device may report a measurement report to a base station of a source cell, the base station of the source cell may select a target cell based on the measurement report, and then the source cell may send a handover request message to a base station of the target cell, to request the base station of the target cell to allocate a resource to the first terminal device. Then, the base station of the target cell may send a handover request response message to the base station of the source cell. The handover request response message may include configuration information of the target cell (that is, the resource allocated to the first terminal device). After receiving the handover request response message, the base station of the source cell may send a handover notification message (which may carry the configuration information of the target cell) to the first terminal device, to indicate the first terminal device to be handed over to the target cell. Then, the first terminal device may be handed over to the target cell based on the handover notification message.

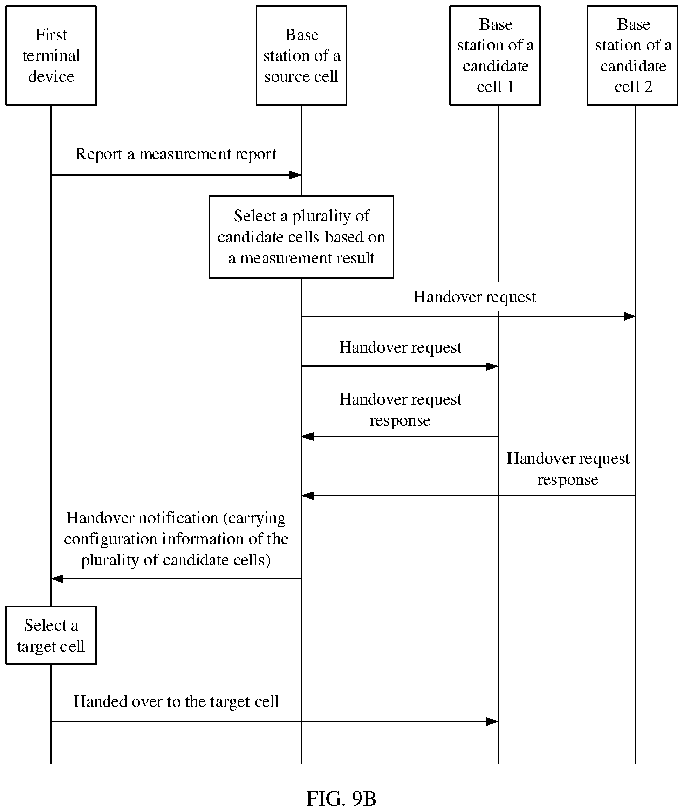

In comparison, in the new handover method, as shown in FIG. 9B, a first terminal device may report a measurement report to a base station of a source cell, the base station of the source cell may select a plurality of candidate cells based on the measurement report, and then the base station of the source cell may send handover request messages to base stations of the plurality of candidate cells (for example, a candidate cell A and a candidate cell B), to request the candidate cells to allocate resources to the first terminal device. Then, the base stations of the plurality of candidate cells each may send a handover request response message to the base station of the source cell. The handover request response message may include the resources allocated to the first terminal device. After receiving the handover request response message, the base station of the source cell may send a handover notification message to the first terminal device. The handover notification message may carry respective configuration information of the plurality of candidate cells. Then, the first terminal device may select a target cell (for example, the candidate cell A) based on the handover notification message, and implement handover of the first terminal device to the target cell through interaction with a base station of the target cell. It should be noted that the candidate cell A and the candidate cell B may be cells of a same network side device, or may be cells of different network side devices. This is not limited in this application.

An occasion on which the first terminal device is triggered to report the measurement report to the base station of the source cell in FIG. 9A may be later than an occasion on which the first terminal device is triggered to report the measurement report to the base station of the source cell in FIG. 9B. For example, in FIG. 9A, when the first terminal device needs to be handed over, the first terminal device may be triggered to report the measurement report to the base station of the source cell. In FIG. 9B, before the first terminal device needs to be handed over, the first terminal device may be triggered to report the measurement report to the base station of the source cell.

FIG. 10 is a schematic flowchart of an information reporting method according to still another embodiment of this application. The information reporting method provided in this embodiment may be applied to a communication system shown in FIG. 11. As shown in FIG. 11, the communication system may include a first network side device, a second network side device, and a first terminal device. The second network side device may provide the first terminal device with a plurality of candidate cells used for cell handover. Herein, a cell of the first network side device may be understood as a base station of a candidate cell 1 in the flowchart shown in FIG. 9B, and a cell of the second network side device may be understood as a base station of a candidate source cell in the flowchart shown in FIG. 9B. It should be noted that, in FIG. 11, an example in which the first network side device communicates with the second network side device in a wireless manner is used. It may be understood that the first network side device may alternatively communicate with the second network side device in a wired manner. This is not limited in this application.

Specifically, the method provided in the embodiment shown in FIG. 10 may be performed by the first network side device in the communication system shown in FIG. 11. As shown in FIG. 10, the method in this embodiment may include the following steps.

Step 1001: The first network side device receives a first message sent by the first terminal device.

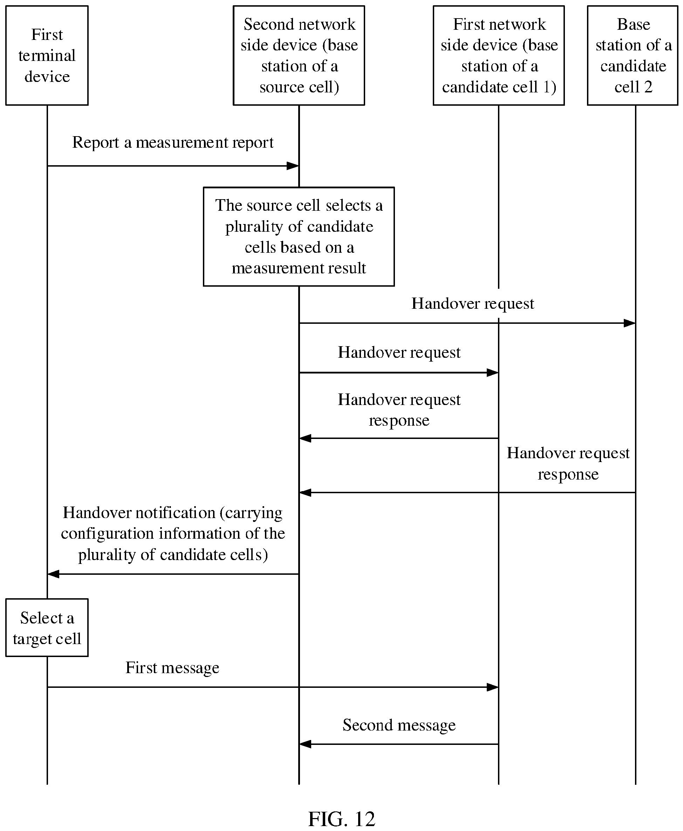

In this step, the first message is used to indicate the first terminal device to select the cell of the second network side device as a target cell. Herein, the first message may be specifically a message generated in a process in which the terminal device interacts with the second network side device to implement "handover to the target cell" in FIG. 5B. Optionally, the first message may be, for example, an RRC reconfiguration complete (RRC Reconfiguration Complete) message. Based on FIG. 5B, an occasion on which the first terminal device sends the first message to the first network side device may be that as shown in FIG. 12. Referring to FIG. 12, after selecting the target cell, the first terminal device may send the first message to the first network side device.

It should be noted that a specific manner in which the first message indicates the first terminal device to select the cell of the second network side device as the target cell may not be limited in this application. Optionally, the first message may include indication information, and the indication information is used to indicate the first terminal device to select the cell of the second network side device as the target cell.

It should be noted that a cell actually selected by the first terminal device as the target cell may be a cell in the plurality of candidate cells provided by the second network side device, or may be a cell other than the plurality of candidate cells. This may not be limited in this application. Herein, some of the plurality of candidate cells provided by the second network side device may be cells of the second network side device, all of the plurality of candidate cells may be cells of the second network side device, or none of the plurality of candidate cells may be a cell of the second network side device. This may not be limited in this application. A cell of a network side device in this application may be specifically understood as a cell served by the network side device. For example, it is assumed that an antenna of a base station includes an antenna 1 and an antenna 2, an antenna coverage area of the antenna 1 is a sector 1, an antenna coverage area of the antenna 2 is a sector 2, the sector 1 corresponds to a cell A and a cell B, and the sector 2 corresponds to a cell C. In this case, the cell A, the cell B, and the cell C are all cells served by the base station.

In consideration that when selecting the target cell, the first terminal device may measure cells to obtain signal quality information of the cells, optionally, the first message may further indicate cell information of at least one candidate cell in the plurality of candidate cells. Further optionally, the first message may include the cell information of the at least one candidate cell in the plurality of candidate cells. Specifically, when the target cell is one of the plurality of candidate cells, the at least one candidate cell may include the target cell. Optionally, the at least one candidate cell further includes a cell other than the target cell in the plurality of candidate cells and/or a cell other than the plurality of candidate cells. When the target cell is the cell other than the plurality of candidate cells, the at least one candidate cell may include one or more candidate cells in the plurality of candidate cells. The cell information may include a cell identifier. It should be noted that the cell identifier may be specifically any identifier (for example, a global cell identifier) that can identify a cell. A specific form of the cell identifier may not be limited in this application.

It should be noted that the cells measured by the first terminal device may include the plurality of candidate cells, and optionally, may further include a cell other than the plurality of candidate cells.

Step 1002: The first network side device sends a second message to the second network side device.

In this step, the second message includes cell information of the target cell, and the cell information includes a cell identifier. Specifically, the second message may include the cell identifier of the target cell. Herein, the second message may be specifically a message generated after the first network side device receives the first message. Optionally, the second message may be a message generated in a process in which the terminal device interacts with the second network side device to implement "handover to the target cell" in FIG. 5B, or may be a message generated after the terminal device interacts with the second network side device to implement "handover to the target cell" in FIG. 5B. For example, the second message is a message generated after the terminal device interacts with the second network side device to implement "handover to the target cell" in FIG. 5B. Based on FIG. 5B, an occasion on which the first network side device sends the second message to the second network side device may be shown in FIG. 12. Referring to FIG. 12, the first network side device may send the second message to the second network side device after receiving the first message sent by the first terminal device.

It should be noted that, when the first message includes the cell information of the at least one candidate cell in the plurality of candidate cells, the second message may include the cell information of the at least one candidate cell. For example, when the first message does not include the cell information, when the second network side device requests the first network side device to send the second message, the first network side device may send the second message to the second network side device (for example, before the second message is sent, the second network side device may send request information to the first network side device, where the request information is used to request the first network side device to send the second message), or when the second network side device does not request the first network side device to send the second message, the first network side device actively sends the second message to the second network side device. For example, when the first message includes the cell information, after the second network side device requests the first network side device to send the second message and receives the first message sent by the first terminal device, the first network side device may send the second message to the second network side device, or after the second network side device does not request the first network side device to send the second message but receives the first message sent by the first terminal device, the first network side device may send the second message to the second network side device.

Herein, the second message may be used by the second network side device to learn of an inter-cell signal quality comparison result.

For example, assuming that the plurality of candidate cells provided by the second network side device are a cell A, a cell B, and a cell C, and the target cell is the cell A, the second message includes a cell identifier of the cell A. After receiving the second message, the second network side device learns that the cell A has better signal quality than the cell B and the cell C.

For another example, assuming that the plurality of candidate cells provided by the second network side device are a cell A, a cell B, a cell C, a cell D, and a cell E, and the target cell is the cell A, the second message includes a cell identifier of the cell A, and may further include cell identifiers of the cell B and the cell C with better signal quality. After receiving the second message, the second network side device may learn that the cell A, the cell B, and the cell C have better signal quality than the cell D and the cell E.

For another example, assuming that the plurality of candidate cells provided by the second network side device are a cell A, a cell B, a cell C, a cell D, and a cell E, and the target cell is the cell A, the second message includes a cell identifier of the cell A, and may further include cell identifiers of the cell D and the cell E with poorer signal quality. After receiving the second message, the second network side device may learn that the cell A, the cell B, and the cell C have better signal quality than the cell D and the cell E.

For another example, assuming that the plurality of candidate cells provided by the second network side device are a cell A, a cell B, and a cell C, and the target cell is the cell A, the second message includes a cell identifier of the cell A, and may further include cell identifiers of the cell B and the cell D with better signal quality. After receiving the second message, the second network side device may learn that the cell A, the cell B, and the cell D have better signal quality than the cell C.

Further optionally, the second message may be specifically used by the second network side device to provide, to a second terminal device, a candidate cell used for cell handover.

For example, it is assumed that the plurality of candidate cells determined by the second network side device for the first terminal device at a moment 1 are a cell A to a cell E, and then the second network side device receives the second message and determines that the cell A has relatively good signal quality. In this case, when subsequently determining the candidate cell for the second terminal device, the second network side device may determine that the cell A is used as one of the plurality of candidate cells.

For another example, it is assumed that the plurality of candidate cells determined by the second network side device for the first terminal device 1 at a moment 1 are a cell A to a cell E, and then the second network side device receives the second message and determines that the cell A, the cell B, and the cell C have better signal quality than the cell D and the cell E. In this case, when subsequently determining the candidate cell for the second terminal device, the second network side device may determine that the plurality of candidate cells are the cell A, the cell B, and the cell C.

For another example, it is assumed that the plurality of candidate cells determined by the second network side device for the first terminal device at a moment 1 are a cell A to a cell C, and then the second network side device receives the second message and determines that the cell A, the cell B, and a cell D have better signal quality than the cell C. In this case, when subsequently determining the candidate cell for the second terminal device, the second network side device may determine that the plurality of candidate cells are the cell A, the cell B, and the cell D, or determine that the plurality of candidate cells include the cell A, the cell B, and the cell D but do not include the cell C.

To enable the second network side device to obtain more details of a signal situation of a cell, optionally, the cell information may further include cell signal information. Herein, the cell signal information may be specifically any type of information that can indicate cell signal quality. Optionally, the cell signal information includes a beam (beam) identifier and signal quality information corresponding to the beam identifier. Alternatively, optionally, the cell information further includes signal quality information corresponding to the cell identifier. It should be noted that signal quality information corresponding to a beam identifier may be specifically any type of information that can indicate signal quality of a beam. A specific form of the signal quality information corresponding to the beam identifier is not limited in this application. Signal quality information corresponding to a cell identifier may be specifically any type information that can indicate signal quality of a cell. A specific form of the signal quality information corresponding to the cell identifier is not limited in this application.

In this embodiment, the first network side device receives the first message sent by the first terminal device, where the first message includes indication information used to indicate the first terminal device to select the cell of the second network side device as the target cell; and the first network side device sends the second message to the second network side device, where the second message includes the cell information of the target cell, and the cell information includes the cell identifier. In this case, the second network side device can learn of a signal quality situation of the cell by using the second message. Compared with Manner 1 to Manner 3, this embodiment improves flexibility of learning of a cell coverage situation by the network side device.

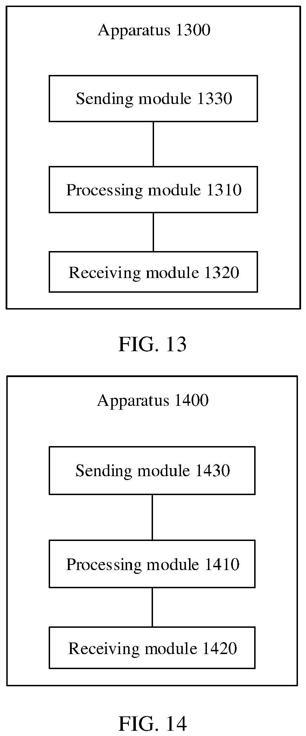

The foregoing describes in detail the information reporting methods in the embodiments of this application with reference to FIG. 1 to FIG. 12. The following describes in detail information reporting apparatuses in the embodiments of this application with reference to FIG. 13 to FIG. 18.

When each function module is obtained through division based on each corresponding function, FIG. 13 is a schematic structural diagram of an information reporting apparatus 1300 according to an embodiment of this application. The information reporting apparatus can perform the steps performed by the network device in the method embodiment shown in FIG. 2 in the method embodiments of this application. As shown in FIG. 13, the information reporting apparatus is a terminal device or an information reporting apparatus that supports the terminal device in implementing the methods provided in the embodiments. For example, the information reporting apparatus may be a chip system. The apparatus 1300 includes a processing module 1310 and a sending module 1320.

In a possible implementation, the processing module 1310 is configured to log reported information if a terminal device is in a first state in a state set and meets a logging condition, where the reported information is used to indicate a network coverage situation, the state set includes one or more of the following states: any cell selection state, camped on any cell state, or camped normally state in which signal quality of a serving cell is less than or equal to a quality threshold, and the logging condition includes one or more of the following: a distance condition or a cell state change condition.

The sending module 1320 is configured to send the reported information to a network side device.

For example, the reported information includes number-of-times information, and the number-of-times information is used to indicate a quantity of times that the terminal device changes from a second state to the first state; and the second state is a state that is in the any cell selection state, the camped on any cell state, or the camped normally state and that is different from the first state.

For example, locations at which the terminal device logs the reported information at two neighboring times correspond to a first location and a second location, and the distance condition includes a condition that a distance between the first location and the second location needs to meet.

For example, the logging condition further includes a time condition.

For example, moments at which the terminal device logs the reported information at two neighboring times correspond to a first moment and a second moment, and the time condition includes a condition that a time difference between the first moment and the second moment needs to meet.

For example, the cell state change condition includes that the terminal device changes from a second state to the first state; and the second state is a state that is in the any cell selection state, the camped on any cell state, or the camped normally state and that is different from the first state.

For example, the first state is the any cell selection state or the camped on any cell state, and the second state is the camped normally state.

In a possible implementation, the sending module 1320 is further configured to send indication information to the network side device in a first radio resource control RRC message, where the indication information is used to indicate that the reported information has been logged.

The apparatus 1300 further includes a receiving module 1330, configured to receive a second RRC message from the network side device, where the second RRC message is used to request the terminal device to send the reported information.

In a possible implementation, that the processing module 1310 is configured to log reported information specifically includes: When configuration information that is sent by the network side device by using a dedicated message is not received, logging the reported information, where the configuration information is used to configure the logging condition.

It should be understood that, in the apparatus 1300, an entity device corresponding to the sending module is a transmitter, an entity device corresponding to the processing module is a processor, and an entity device corresponding to the receiving module is a receiver.

It should be understood that the apparatus 1300 herein is represented in a form of a function unit. The term "module" herein may refer to an application-specific integrated circuit (application specific integrated circuit, ASIC), an electronic circuit, a processor (for example, a shared processor, a special purpose processor, or a group processor) configured to execute one or more software or firmware programs, a memory, a merged logic circuit, and/or another suitable component that supports the described function. In an optional example, a person skilled in the art may understand that, the apparatus 1300 may be specifically the terminal device in the foregoing embodiments, and the apparatus 1300 may be configured to perform procedures and/or steps corresponding to the terminal device in the foregoing method embodiments. To avoid repetition, details are not described herein.

When each function module is obtained through division based on each corresponding function, FIG. 14 is a schematic structural diagram of an information reporting apparatus 1400 according to an embodiment of this application. The information reporting apparatus can perform the steps performed by the network device in the method embodiment shown in FIG. 4 in the method embodiments of this application. As shown in FIG. 14, the information reporting apparatus is a terminal device or an information reporting apparatus that supports the terminal device in implementing the methods provided in the embodiments. For example, the information reporting apparatus may be a chip system. The apparatus 1400 includes a processing module 1410 and a sending module 1420.

In a possible implementation, the processing module 1410 is configured to log reported information if a terminal device is in a first state in a state set, where the reported information is used to indicate a network coverage situation, and the state set includes one or more of the following states: any cell selection state, camped on any cell state, or camped normally state in which signal quality of a serving cell is less than or equal to a quality threshold.

The processing module 1410 is further configured to: otherwise, stop logging the reported information.

The sending module 1420 is configured to send the reported information to a network side device.

In a possible implementation, that the processing module 1410 is configured to log reported information if a terminal device is in a first state in a state set specifically includes: logging the reported information if the terminal device is in the first state and meets a logging condition, where the logging condition includes one or more of the following: a distance condition or a cell state change condition.

For example, the reported information includes number-of-times information, and the number-of-times information is used to indicate a quantity of times that the terminal device changes from a second state to the first state; and the second state is a state that is in the any cell selection state, the camped on any cell state, or the camped normally state and that is different from the first state.

For example, locations at which the terminal device logs the reported information at two neighboring times correspond to a first location and a second location, and the distance condition includes a condition that a distance between the first location and the second location needs to meet.

For example, the logging condition further includes a time condition.

For example, moments at which the terminal device logs the reported information at two neighboring times correspond to a first moment and a second moment, and the time condition includes a condition that a time difference between the first moment and the second moment needs to meet.

For example, the cell state change condition includes that the terminal device changes from a second state to the first state; and the second state is a state that is in the any cell selection state, the camped on any cell state, or the camped normally state and that is different from the first state.

For example, the first state is the any cell selection state or the camped on any cell state, and the second state is the camped normally state.

In a possible implementation, the sending module 1420 is further configured to send indication information to the network side device in a first radio resource control RRC message, where the indication information is used to indicate that the reported information has been logged.

The apparatus 1400 further includes a receiving module 1430, configured to receive a second RRC message from the network side device, where the second RRC message is used to request the terminal device to send the reported information.

In a possible implementation, that the processing module 1410 is configured to log reported information specifically includes: When configuration information that is sent by the network side device by using a dedicated message is not received, logging the reported information, where the configuration information is used to configure the logging condition.

It should be understood that, in the apparatus 1400, an entity device corresponding to the sending module is a transmitter, an entity device corresponding to the processing module is a processor, and an entity device corresponding to the receiving module is a receiver.

It should be understood that the apparatus 1400 herein is represented in a form of a function unit. The term "module" herein may refer to an application-specific integrated circuit (application specific integrated circuit, ASIC), an electronic circuit, a processor (for example, a shared processor, a special purpose processor, or a group processor) configured to execute one or more software or firmware programs, a memory, a merged logic circuit, and/or another suitable component that supports the described function. In an optional example, a person skilled in the art may understand that, the apparatus 1400 may be specifically the terminal device in the foregoing embodiments, and the apparatus 1400 may be configured to perform procedures and/or steps corresponding to the terminal device in the foregoing method embodiments. To avoid repetition, details are not described herein.

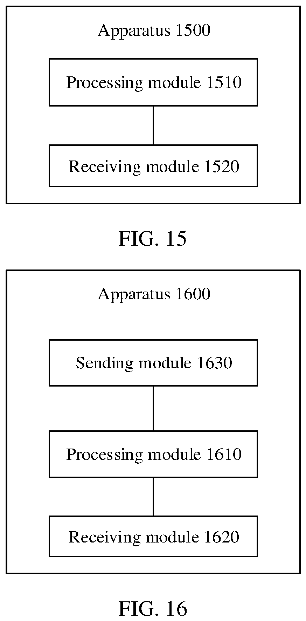

When each function module is obtained through division based on each corresponding function, FIG. 15 is a schematic structural diagram of an information reporting apparatus 1500 according to an embodiment of this application. The information reporting apparatus can perform the steps performed by the network device in the method embodiment shown in FIG. 8 in the method embodiments of this application. As shown in FIG. 15, the information reporting apparatus is a terminal device or an information reporting apparatus that supports the terminal device in implementing the methods provided in the embodiments. For example, the information reporting apparatus may be a chip system. The apparatus 1500 includes a processing module 1510 and a sending module 1520.

In a possible implementation, the processing module 1510 is configured to log a first identifier in mobility history information when the terminal device enters an out-of-service area from a first cell, where the first identifier is used to indicate that the terminal device enters the out-of-service area.

The sending module 1520 is configured to send the mobility history information to a network side device.

In a possible implementation, the processing module 1510 is further configured to log, by the device, a second identifier in the mobility history information when the terminal device enters a second cell from the out-of-service area, where the second identifier is used to indicate that the terminal device leaves the out-of-service area.

For example, that the terminal device enters the out-of-service area corresponds to that the terminal device is in any cell selection state; and/or that the terminal device enters the out-of-service area corresponds to that the terminal device is in camped on any cell state.

For example, the terminal device is in connected mode, and the terminal device is connected to both a serving cell of a master node and a serving cell of a secondary node.

If the first cell is the serving cell of the secondary node, a third cell is the serving cell of the secondary node, and signal quality of the third cell is less than or equal to a quality threshold, the entering an out-of-service area from a first cell includes: entering the third cell from the first cell. In other words, in this case, the terminal device logs the first identifier in the mobility history information.

Optionally, the processing module is further configured to log an identifier of the first cell in the mobility history information.

It should be understood that, in the apparatus 1500, an entity device corresponding to the sending module is a transmitter, and an entity device corresponding to the processing module is a processor.

It should be understood that the apparatus 1500 herein is represented in a form of a function unit. The term "module" herein may refer to an application-specific integrated circuit (application specific integrated circuit, ASIC), an electronic circuit, a processor (for example, a shared processor, a special purpose processor, or a group processor) configured to execute one or more software or firmware programs, a memory, a merged logic circuit, and/or another suitable component that supports the described function. In an optional example, a person skilled in the art may understand that, the apparatus 1500 may be specifically the terminal device in the foregoing embodiments, and the apparatus 1500 may be configured to perform procedures and/or steps corresponding to the terminal device in the foregoing method embodiments. To avoid repetition, details are not described herein.

When each function module is obtained through division based on each corresponding function, FIG. 16 is a schematic structural diagram of an information reporting apparatus 1600 according to an embodiment of this application. The information reporting apparatus can perform the steps performed by the network side device in the embodiment shown in FIG. 10 in the method embodiments of this application. As shown in FIG. 16, the information reporting apparatus is a network side device or an information reporting apparatus that supports the network side device in implementing the methods provided in the embodiments. For example, the information reporting apparatus may be a chip system. The apparatus 1600 includes a processing module 1610, a receiving module 1620, and a sending module 1630.

In a possible implementation, the processing module 1610 is configured to receive, by using the receiving module 1620, a first message sent by a first terminal device, where the first message is used to indicate that the first terminal device selects a cell of a second network side device as a target cell.

The processing module 1620 is further configured to send a second message to the second network side device by using the sending module 1630, where the second message includes cell information of the target cell, and the cell information includes a cell identifier.

For example, the first message is further used to indicate cell information of at least one candidate cell in a plurality of candidate cells.

The second message further includes the cell information of the at least one candidate cell.

For example, the second message is used by the second network side device to provide, to a second terminal device, a candidate cell used for cell handover.

For example, the cell information further includes cell signal information.

For example, the cell signal information includes a beam identifier and signal quality information corresponding to the beam identifier.

For example, the cell signal information further includes signal quality information corresponding to the cell identifier.

It should be understood that, in the apparatus 1600, an entity device corresponding to the processing module is a processor, an entity device corresponding to the receiving module is a receiver, and an entity device corresponding to the sending module is a transmitter.

It should be understood that, the apparatus 1600 herein is represented in a form of a function unit. The term "module" herein may refer to an application-specific integrated circuit (application specific integrated circuit, ASIC), an electronic circuit, a processor (for example, a shared processor, a special purpose processor, or a group processor) configured to execute one or more software or firmware programs, a memory, a merged logic circuit, and/or another suitable component that supports the described function. In an optional example, a person skilled in the art may understand that, the apparatus 1600 may be specifically the network side device in the foregoing embodiments, and the apparatus 1600 may be configured to perform procedures and/or steps corresponding to the first network device in the foregoing method embodiments. To avoid repetition, details are not described herein.

The apparatus 1300, the apparatus 1400, and the apparatus 1500 in the foregoing solutions have functions of implementing corresponding steps performed by the terminal device in the foregoing methods, and the apparatus 1600 has a function of implementing corresponding steps performed by the network side device in the foregoing methods. The function may be implemented by hardware, or may be implemented by hardware by executing corresponding software. The hardware or the software includes one or more modules corresponding to the foregoing functions. For example, the sending module may be replaced by a transmitter, the receiving module may be replaced by a receiver, and another module such as the processing module may be replaced by a processor, to perform the sending operation, the receiving operation, and the related processing operation in each method embodiment. That is, the receiving module may be a receiver, the sending module may be a transmitter, and the processing module may be a processor.

In the embodiments of this application, the apparatuses in FIG. 13 to FIG. 16 may alternatively be a chip or a chip system, for example, a system on chip (system on chip, SoC). Correspondingly, the receiving module and the sending module may be a transceiver circuit of the chip. No limitation is imposed herein.

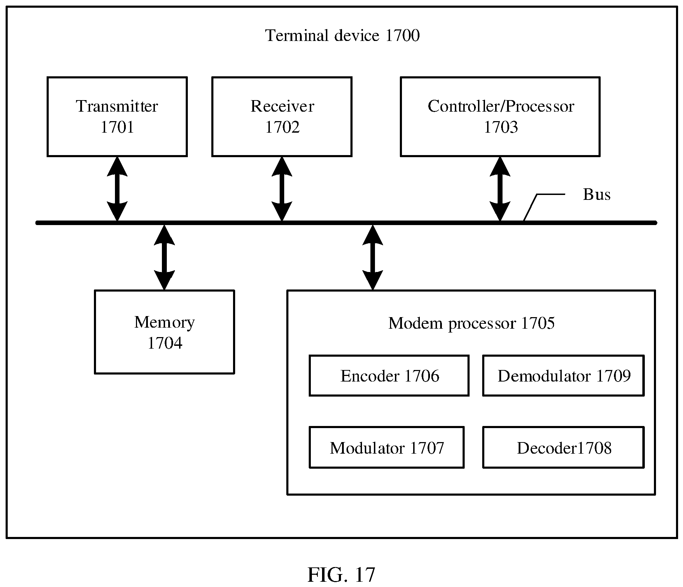

FIG. 17 is a schematic structural diagram of a terminal device according to an embodiment of this application. The diagram may be a simplified schematic diagram of a possible design structure of the terminal device in the foregoing embodiments. The terminal device 1700 shown in FIG. 17 includes a transmitter 1701, a receiver 1702, a controller/processor 1703, a memory 1704, and a modem processor 1705.

The transmitter 1701 is configured to send an uplink signal, and the uplink signal is transmitted to the network side device in the foregoing embodiments by using an antenna. In a downlink, an antenna receives a downlink signal transmitted by the network side device in the foregoing embodiments. The receiver 1702 is configured to receive the downlink signal received from the antenna. In the modem processor 1705, an encoder 1706 receives service data and a signaling message that are to be sent on an uplink, and processes the service data and the signaling message. A modulator 1707 further processes (for example, performs symbol mapping and modulation on) encoded service data and an encoded signaling message and provides an output sample. A demodulator 1705 processes (for example, demodulates) the input sample and provides symbol estimation. A decoder 17017 processes (for example, decodes) the symbol estimation and provides decoded data and a decoded signaling message that are to be sent to the terminal device. The encoder 1706, the modulator 1707, the decoder 17017, and the demodulator 1709 may be implemented by the combined modem processor 1705. The units perform processing based on a radio access technology used by a radio access network.

The controller/processor 1703 controls and manages an action of the terminal device and is configured to perform processing performed by the terminal device in the foregoing method embodiments. For example, the controller/processor 1703 is configured to log reported information if the terminal device is in a first state in a state set and meets a logging condition, where the reported information is used to indicate a network coverage situation, the state set includes one or more of the following states: any cell selection state, camped on any cell state, or camped normally state in which signal quality of a serving cell is less than or equal to a quality threshold, and the logging condition includes one or more of the following: a distance condition or a cell state change condition; and the transmitter 1701 is configured to send the reported information to a network side device.

For example, the controller/processor 1703 is configured to log reported information if the terminal device is in a first state in a state set, where the reported information is used to indicate a network coverage situation, and the state set includes one or more of the following states: any cell selection state, camped on any cell state, or camped normally state in which signal quality of a serving cell is less than or equal to a quality threshold; and the transmitter 1701 is configured to send the reported information to a network side device.

For example, the controller/processor 1703 is configured to log a first identifier in mobility history information when the terminal device enters an out-of-service area from a first cell, where the first identifier is used to indicate that the terminal device enters the out-of-service area; and the transmitter 1701 is configured to send the mobility history information to a network side device.

It should be understood that the terminal device 1700 may be specifically the terminal device in the foregoing embodiments, and may be configured to perform the steps and/or procedures that are in the foregoing method embodiments and that correspond to the terminal device. Optionally, the memory 1704 may include a read-only memory and a random access memory, and provide instructions and data for the controller/processor 1703. A part of the memory 1704 may further include a non-volatile random access memory. For example, the memory may further store information about a device type. The controller/processor 1703 may be configured to execute the instructions stored in the memory, and when the controller/processor 1703 executes the instructions stored in the memory, the controller/processor 1703 is configured to perform the steps and/or the procedures that are in the foregoing method embodiments and that correspond to the terminal device.

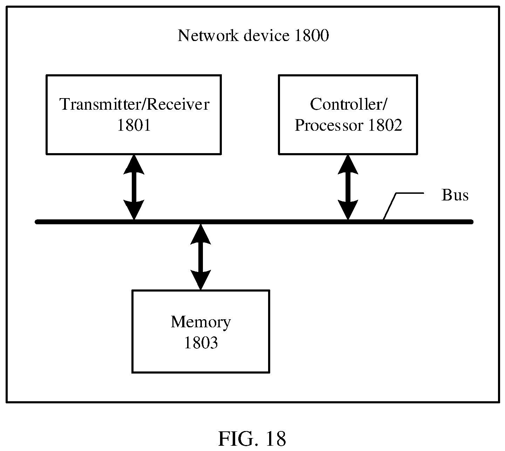

FIG. 18 is a schematic structural diagram of a network side device according to this application. The network side device 1800 shown in FIG. 18 includes a transmitter/receiver 1801, a controller/processor 1802, and a memory 1803.

The transmitter/receiver 1801 is configured to support information receiving and sending between the network side device and the terminal device in the foregoing embodiments. The controller/processor 1802 performs various functions for communicating with the terminal device. In an uplink, an uplink signal from the terminal device is received by using an antenna, is demodulated by the receiver 1801, and is further processed by the controller/processor 1802 to restore service data and signaling information that are sent by the terminal device. On a downlink, service data and a signaling message are processed by the controller/processor 1802 and are demodulated by the transmitter 1801 to generate a downlink signal, and the downlink signal is transmitted to the terminal device by using an antenna. The controller/processor 1802 further performs a processing process related to the network side device in the foregoing method embodiments and/or another process used for the technology described in this application. The memory 1803 is configured to store program code and data of the network side device.

For example, the controller/processor 1802 is configured to receive, by using the transmitter/receiver 1801, a first message sent by a first terminal device, where the first message is used to indicate that the first terminal device selects a cell of a second network side device as a target cell.

The controller/processor 1802 is configured to send a second message to the second network side device by using the transmitter/receiver 1801, where the second message includes cell information of the target cell, and the cell information includes a cell identifier.

It should be understood that the network side device 1800 may be specifically the network side device in the foregoing embodiments, and may be configured to perform the steps and/or procedures that are in the foregoing method embodiments and that correspond to the network side device. Optionally, the memory 1803 may include a read-only memory and a random access memory, and provide instructions and data for the controller/processor 1802. Apart of the memory 1803 may further include a non-volatile random access memory. For example, the memory may further store information about a device type. The controller/processor 1802 may be configured to execute the instructions stored in the memory, and when the controller/processor 1802 executes the instructions stored in the memory, the controller/processor 1802 is configured to perform the steps and/or the procedures that are in the foregoing method embodiments and that correspond to the network side device.

In the embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general-purpose processor may be a microprocessor or any conventional processor or the like. The steps of the methods disclosed with reference to the embodiments of this application may be directly performed by a hardware processor, or may be performed by using a combination of hardware in the processor and a software module.

In the embodiments of this application, the memory may be a non-volatile memory, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction structure or a data structure and that can be accessed by a computer, but is not limited thereto. The memory in the embodiments of this application may alternatively be a circuit or any other apparatus that can implement a storage function, and is configured to store program instructions and/or data.

In this application, "at least one" refers to one or more, and "a plurality of' refers to two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. "At least one of the following" or a similar expression thereof indicates any combination of the following, and includes any combination of one or more of the following. For example, at least one (piece) of a, b, or c may indicate the following cases: a, b, c, a and b, a and c, b and c, or a, b, and c, where a, b, and c may be singular or plural.

A person of ordinary skill in the art may be aware that, in combination with the examples described in the embodiments disclosed in this specification, method steps and units can be implemented by electronic hardware, computer software, or a combination thereof. To clearly describe the interchangeability between the hardware and the software, the foregoing has generally described steps and composition of each embodiment according to functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for ease of convenience and brevity, for a detailed working process of the foregoing system, apparatus, and unit, refer to a corresponding process in the foregoing method embodiments, and details are not repeatedly described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the units may be implemented in an electrical form, a mechanical form, or another form.

Units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments of this application.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. An information reporting method, comprising:
logging, by a terminal device in a first state in a state set, reported information if meeting a logging condition, wherein the reported information is used to indicate a network coverage situation, the state set comprises one or more of the following states: any cell selection state, camped on any cell state, or camped normally state in which signal quality of a serving cell is less than or equal to a quality threshold, and the logging condition comprises one or more of the following: a distance condition or a cell state change condition; and
sending, by the terminal device, the reported information to a network side device.

2. An information reporting method, comprising:
logging, by a terminal device, reported information and sending the reported information to a network side device if the terminal device is in a first state in a state set, wherein the reported information is used to indicate a network coverage situation, and the state set comprises one or more of the following states: any cell selection state, camped on any cell state, or camped normally state in which signal quality of a serving cell is less than or equal to a quality threshold;
otherwise, stopping, by the terminal device, logging the reported information.

3. The method according to claim 2, wherein the logging, by the terminal device, reported information if the terminal device is in a first state in a state set comprises:
logging the reported information if the terminal device is in the first state and meets a logging condition, wherein the logging condition comprises one or more of the following: a distance condition or a cell state change condition.

4. The method according to claim 2, wherein the logging, by the terminal device, reported information if the terminal device is in a first state in a state set comprises:
logging the reported information if the terminal device receives notification information, wherein the notification information is used to notify that the terminal device is in the first state in the state set.

5. The method according to any one of claims 1 to 4, wherein if the terminal device is in the any cell selection state or the camped on any cell state, the reported information comprises at least one of current time information of the terminal device, current location information of the terminal device, and information used to represent a current state of the terminal device.

6. The method according to any one of claims 1 to 4, wherein if the terminal device is in the camped normally state in which the signal quality of the serving cell is less than or equal to the quality threshold, the reported information comprises at least one of current time information of the terminal device, current location information of the terminal device, and signal quality information of the serving cell.

7. An information reporting apparatus, comprising:
a processing module, configured to log reported information if a terminal device is in a first state in a state set and meets a logging condition, wherein the reported information is used to indicate a network coverage situation, the state set comprises one or more of the following states: any cell selection state, camped on any cell state, or camped normally state in which signal quality of a serving cell is less than or equal to a quality threshold, and the logging condition comprises one or more of the following: a distance condition or a cell state change condition; and
a sending module, configured to send the reported information to a network side device.

8. An information reporting apparatus, comprising:
a processing module, configured to: log reported information if a terminal device is in a first state in a state set, wherein the reported information is used to indicate a network coverage situation, and the state set comprises one or more of the following states: any cell selection state, camped on any cell state, or camped normally state in which signal quality of a serving cell is less than or equal to a quality threshold; otherwise, stop logging the reported information; and
a sending module, configured to send the reported information to a network side device if the processing module logs the reported information.

9. The apparatus according to claim 8, wherein that the processing module is configured to log reported information if a terminal device is in a first state in a state set specifically comprises:
logging the reported information if the terminal device is in the first state and meets a logging condition, wherein the logging condition comprises one or more of the following: a distance condition or a cell state change condition.

10. The apparatus according to claim 8, wherein that the processing module is configured to log reported information if a terminal device is in a first state in a state set specifically comprises:
logging the reported information if the terminal device receives notification information, wherein the notification information is used to notify that the terminal device is in the first state in the state set.

11. The apparatus according to any one of claims 7 to 10, wherein if the terminal device is in the any cell selection state or the camped on any cell state, the reported information comprises at least one of current time information of the terminal device, current location information of the terminal device, and information used to represent a current state of the terminal device.

12. The apparatus according to any one of claims 7 to 10, wherein if the terminal device is in the camped normally state in which the signal quality of the serving cell is less than or equal to the quality threshold, the reported information comprises at least one of current time information of the terminal device, current location information of the terminal device, and signal quality information of the serving cell.

13. The method according to any one of claims 1 to 6, or the apparatus according to any one of claims 7 to 12, wherein the reported information comprises number-of-times information, and the number-of-times information is used to indicate a quantity of times that the terminal device changes from a second state to the first state; and the second state is a state that is in the any cell selection state, the camped on any cell state, or the camped normally state and that is different from the first state.

14. The method according to claim 1 or 3, or the apparatus according to claim 7 or 9, wherein locations at which the terminal device logs the reported information at two neighboring times correspond to a first location and a second location, and the distance condition comprises a condition that a distance between the first location and the second location should meet.

15. The method according to claim 1 or 3, or the apparatus according to claim 7 or 9, wherein the logging condition further comprises a time condition.

16. The method or apparatus according to claim 15, wherein moments at which the terminal device logs the reported information at two neighboring times correspond to a first moment and a second moment, and the time condition comprises a condition that a time difference between the first moment and the second moment needs to meet.

17. The method according to claim 1 or 3, or the apparatus according to claim 7 or 9, wherein the cell state change condition comprises that the terminal device changes from a second state to the first state; and the second state is a state that is in the any cell selection state, the camped on any cell state, or the camped normally state and that is different from the first state.

18. The method according to claim 13, or the apparatus according to claim 17, wherein the first state is the any cell selection state or the camped on any cell state, and the second state is the camped normally state.

19. The method according to any one of claims 1 to 6 and 13 to 18, wherein the method further comprises:
sending, by the terminal device, indication information to the network side device in a first radio resource control RRC message, wherein the indication information is used to indicate that the reported information has been logged; and
receiving, by the terminal device, a second RRC message from the network side device, wherein the second RRC message is used to request the terminal device to send the reported information.

20. The method according to claim 1 or 3, wherein when not receiving configuration information that is sent by the network side device by using a dedicated message, the terminal device logs the reported information, wherein the configuration information is used to configure the logging condition.

21. The apparatus according to any one of claims 7 to 12 and 13 to 18, wherein the sending module is further configured to send indication information to the network side device in a first radio resource control RRC message, wherein the indication information is used to indicate that the reported information has been logged; and
the apparatus further comprises a receiving module, configured to receive a second RRC message from the network side device, wherein the second RRC message is used to request the terminal device to send the reported information.

22. The apparatus according to claim 7 or 9, wherein that the processing module is configured to log reported information specifically comprises:
when configuration information that is sent by the network side device by using a dedicated message is not received, logging the reported information, wherein the configuration information is used to configure the logging condition.

23. A communication device, comprising a transceiver, a processor, and a memory, wherein
the memory stores computer-executable instructions; and
the processor executes the computer-executable instructions stored in the memory, to enable the processor to perform the communication method according to any one of claims 1, 5, 6, and 13 to 20.

24. A communication device, comprising a transceiver, a processor, and a memory, wherein
the memory stores computer-executable instructions; and
the processor executes the computer-executable instructions stored in the memory, to enable the processor to perform the communication method according to any one of claims 2 to 6 and 13 to 20.

25. A computer-readable storage medium, comprising computer software instructions, wherein when the computer software instructions are run on an information reporting apparatus, the information reporting apparatus is enabled to perform the method according to any one of claims 1, 5, 6, and 13 to 20.

26. A computer-readable storage medium, comprising computer software instructions, wherein when the computer software instructions are run on an information reporting apparatus, the information reporting apparatus is enabled to perform the method according to any one of claims 2 to 6 and 13 to 20.

27. A computer program product, wherein when the computer program product runs on an information reporting apparatus, the computer is enabled to perform the method according to any one of claims 1, 5, 6, and 13 to 20.

28. A computer program product, wherein when the computer program product runs on an information reporting apparatus, the computer is enabled to perform the method according to any one of claims 2 to 6 and 13 to 20.
